(19) Europäisches Patentamt
European Patent Office
Office européen des brevets

(11) **EP 4 694 475 A1**

(12) **EUROPEAN PATENT APPLICATION**
published in accordance with Art. 153(4) EPC

(43) Date of publication:
**11.02.2026 Bulletin 2026/07**

(21) Application number: **24784688.4**

(22) Date of filing: **13.03.2024**

(51) International Patent Classification (IPC):
**H04W 72/1268** (2023.01)   **H04W 72/21** (2023.01)
**H04W 72/512** (2023.01)

(52) Cooperative Patent Classification (CPC):
**H04W 72/1268; H04W 72/21; H04W 72/512**

(86) International application number:
**PCT/JP2024/009669**

(87) International publication number:
**WO 2024/209893 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **07.04.2023   JP 2023062921**

(71) Applicant: **DENSO CORPORATION**
**Kariya-city, Aichi 448-8661 (JP)**

(72) Inventor: **NAGANO, Tatsuki**
**Kariya- city, Aichi 4488661 (JP)**

(74) Representative: **TBK**
**Bavariaring 4-6**
**80336 München (DE)**

(54)   **TERMINAL DEVICE AND METHOD FOR TERMINAL DEVICE**

(57)   A terminal apparatus (10) includes: a receiver (122) configured to receive, from a base station apparatus (20), a radio resource control (RRC) message including information for configuring an identifier of a logical channel group (LCG) to which a logical channel (LCH) belongs, and information for indicating a threshold for control of triggering of a delay status report (DSR) for data of the LCG; and a controller (110) configured to control the triggering of the DSR on the basis of that remaining time with respect to an earliest time limit for the data of the LCG becomes below the threshold and the DSR for the data of the LCG is not transmitted.

Fig. 20

**Description**

Cross-Reference To Related Application

The present application is based on and claims the benefit of priority to Japanese Patent Application No. 2023-62921 filed on April 7, 2023, the contents of which are incorporated herein by reference in its entirety.

Technical Field

The present disclosure relates to a terminal apparatus, and a method of a terminal apparatus.

Background

In recent years, a technology of extended reality (XR) has been developed. XR is a concept including multi-media integration technologies, such as virtual reality (VR), augmented reality (AR), mixed reality (MR), and substitutional reality (SR). In XR, three-dimensional time series image data in a real space and/or a virtual space, audio data of a plurality of channels (stereo, 5.1ch or the like), other data presented to a user, control data, and the like are transmitted and received in parallel. XR requires low latency and high reliability in order to maintain and enhance quality of experience of users.

In NPL 1, implementation of XR in Fifth Generation New Radio (5G NR) being radio specifications defined by the Third Generation Partnership Project (3GPP (trademark)) is studied.

Citation List

Non Patent Literature

[NPL 1] 3GPP TR 38.838 V17.0.0 (2021-12)
[NPL 2] 3GPP TS 38.321 V17.2.0 (2022-09)
[NPL 3] 3GPP TS 38.331 V17.2.0 (2022-09)

**SUMMARY**

Meanwhile, NPL 2 describes a buffer status report (Buffer Status Reporting (BSR)) procedure. Furthermore, NPL 3 describes parameters that are transmitted from a base station apparatus and that are used for the BSR. The BSR indicates, for certain data, a buffer size of uplink data. The certain data is data corresponding to one logical channel group (LCG). A terminal apparatus calculates a buffer size for each LCG and transmits the BSR including the calculated buffer size to a base station apparatus. Based on the BSR, the base station apparatus allocates a radio resource for the terminal apparatus.

XR is assumed to be implemented under various requirements including a requirement of low latency. Thus, uplink communication from a terminal apparatus requires radio resource allocation taking account of the requirements. However, in the BSR described in NPLs 2 and 3, the terminal apparatus can only transmit one piece of information (i.e., information related to a buffer size) for certain data. Such small amount of information reported to a base station apparatus may prevent the base station apparatus from appropriately allocating a radio resource for the terminal apparatus. Hence, it is studied to report, in the BSR, certain information (for example, information related to delay) in addition to the buffer size. Furthermore, it is also studied to report the certain information to the base station apparatus in a reporting method other than the BSR.

The inventor found out an issue in that a procedure of appropriately determining whether to trigger or transmit a report of the certain information is required. Meanwhile, in NPLs 2 and 3, such a procedure is not described. Note that the issue is also present in a typical terminal apparatus and base station apparatus other than one implemented with XR.

The present disclosure provides a technique that can appropriately determine whether to trigger or transmit a certain information report.

A terminal apparatus in the present disclosure includes: a receiver configured to receive, from a base station apparatus, a radio resource control (RRC) message including information for configuring an identifier (ID) of a logical channel group (LCG) to which a logical channel (LCH) belongs, and information for indicating a threshold for control of triggering of a delay status report (DSR) for data of the LCG; and a controller configured to control the triggering of the DSR on the basis of that remaining time with respect to an earliest time limit for the data of the LCG becomes below the threshold and the DSR for the data of the LCG is not transmitted. The controller is configured to cancel, in a case where a time limit for the data of the LCG associated with the DSR expires, the DSR that has been triggered and has not been cancelled.

A method of a terminal apparatus in the present disclosure includes receiving, from a base station apparatus, a radio resource control (RRC) message including information for configuring an identifier (ID) of a logical channel group (LCG) to which a logical channel (LCH) belongs, and information for indicating a threshold for control of triggering of a delay status report (DSR) for data of the LCG, controlling the triggering of the DSR on the basis of that remaining time with respect to an earliest time limit for the data of the LCG becomes below the threshold and the DSR for the data of the LCG is not transmitted, and cancelling, in a case where a time limit for the data of the LCG associated with the DSR expires, the DSR that has been triggered and has not been cancelled.

Such a configuration described above enables appropriately determining whether to trigger or transmit the delay information report. Note that the configuration described above may provide, instead of or in addition to such an effect, another effect.

## BRIEF DESCRIPTION OF THE DRAWINGS

The above and other objects, features, and advantages of the present disclosure will become more apparent in the following detailed description with reference to the accompanying drawings, in which:

Fig. 1 is a diagram illustrating a communication system S according to a first embodiment;
Fig. 2 is a diagram illustrating a protocol stack in the U plane according to the first embodiment;
Fig. 3 is a diagram illustrating a protocol stack in the C plane according to the first embodiment;
Fig. 4 is a block diagram schematically illustrating a hardware configuration of a terminal apparatus 10 according to the first embodiment;
Fig. 5 is a block diagram schematically illustrating a functional configuration of the terminal apparatus 10 according to the first embodiment;
Fig. 6 is a block diagram schematically illustrating a hardware configuration of a base station apparatus 20 according to the first embodiment;
Fig. 7 is a block diagram schematically illustrating a functional configuration of the base station apparatus 20 according to the first embodiment;
Fig. 8 is a diagram illustrating a radio frame configuration according to a first embodiment;
Fig. 9 is a diagram illustrating a configuration of Short BSR;
Fig. 10 is a diagram illustrating a configuration of Long BSR;
Fig. 11 is a sequence diagram illustrating a process flow of the terminal apparatus 10 and base station apparatus 20 according to the first embodiment;
Fig. 12 is a diagram illustrating an example of a configuration of Long BSR including delay information;
Fig. 13 is a diagram illustrating another example of the configuration of Long BSR including the delay information;
Fig. 14 is a diagram illustrating another example of the configuration of Long BSR including the delay information;
Fig. 15 is a diagram illustrating an example that a delay information report is transmitted;
Fig. 16 is a sequence diagram illustrating a process flow of the terminal apparatus 10 according to Aspect 1-1 of the first embodiment;
Fig. 17 is a sequence diagram illustrating a process flow of the terminal apparatus 10 according to Aspect 1-2 of the first embodiment;
Fig. 18 is a sequence diagram illustrating a process flow of the terminal apparatus 10 according to an alteration of the first embodiment;
Fig. 19 is a sequence diagram illustrating a process flow of the terminal apparatus 10 according to Aspect 2-1 of a second embodiment; and
Fig. 20 is a sequence diagram illustrating a process flow of the terminal apparatus 10 according to Aspect 2-2 of the second embodiment.

## DETAILED DESCRIPTION

Hereinafter, embodiments of the present disclosure will be described in detail with reference to the accompanying drawings. Note that, in the Specification and drawings, elements to which similar descriptions are applicable are denoted by the same reference signs, and overlapping descriptions may hence be omitted.

Each embodiment described below is merely an example of a configuration that can implement the present disclosure. Each embodiment described below can be appropriately modified or changed according to a configuration of an apparatus to which the present disclosure is applied and various conditions. All of combinations of elements included in each embodiment described below are not necessarily required to implement the present disclosure, and a part of the elements can be appropriately omitted. Hence, the scope of the present disclosure is not limited by the configuration described in each embodiment described below. Configurations in which a plurality of configurations described in the embodiments below are combined can also be employed as long as the configurations are not inconsistent with each other.

1. First Embodiment

1.1. Communication System

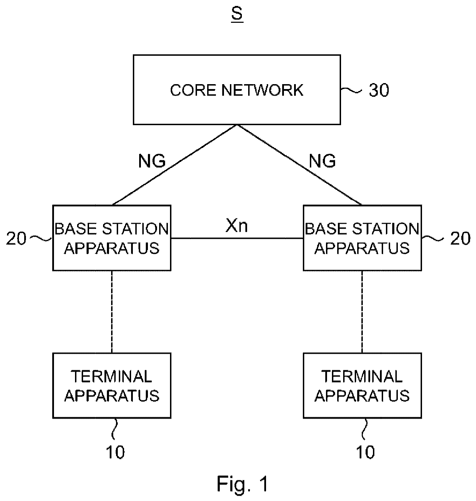

As illustrated in Fig. 1, a communication system S according to a first embodiment includes one or more terminal apparatuses 10, one or more base station apparatuses 20, and a core network 30. The communication system S is configured in accordance with certain technical specifications (TS). For example, the communication system S may be compliant with technical specifications defined by 3GPP (for example, 5G, 5G advanced, 6G, or the like).

In the communication system S, a user plane in which user data is transmitted and received and a control plane in which control data is transmitted and received are separately configured. In other words, the communication system S supports C/U split. The user plane is abbreviated to the U plane, and the control plane is abbreviated to the C plane.

The terminal apparatus 10 may be a device that performs radio communication with the base station apparatus 20, and may be, for example, a user equipment (UE) that operates in accordance with 5G NR specifications of 3GPP. The terminal apparatus 10 may be an apparatus that is compliant with other older or newer 3GPP specifications.

The terminal apparatus 10 may be, for example, a mobile phone terminal such as a smartphone, a tablet terminal, a notebook PC, a communication module, a communication card, or an IoT device such as a surveillance camera and a robot. The terminal apparatus 10 may be a vehicle (for example, a car, a train, or the like), or an apparatus mounted on the vehicle. The terminal apparatus 10 may be a transport machine body other than the vehicle (for example, a ship, an airplane, or the like), or an apparatus mounted on the transport machine body. The terminal apparatus 10 may be a sensor, or an apparatus provided with the sensor. Note that the terminal apparatus 10 may be referred to as another name such as a terminal, a mobile station, a mobile terminal, a mobile apparatus, a mobile unit, a subscriber station, a subscriber terminal, a subscriber apparatus, a subscriber unit, a wireless station, a wireless terminal, a wireless apparatus, a wireless unit, a remote station, a remote terminal, a remote apparatus, and a remote unit. The terminal apparatus 10 is preferably an apparatus adapted to one or more of enhanced mobile broadband (eMBB), ultra-reliable and low-latency communications (URLLC), and massive machine type communications (mMTC).

The base station apparatus 20 manages at least one cell. The cell configures a minimum unit of a communication area. For example, one cell belongs to one frequency (for example, carrier frequency), and is configured with one component carrier. The term "cell" may represent radio communication resources, and may represent a communication target of the terminal apparatus 10. The base station apparatus 20 performs radio communication with the terminal apparatus 10 existing in the cell of the base station apparatus 20 in the U plane and the C plane. In other words, the base station apparatus 20 terminates a U plane protocol and a C plane protocol for the terminal apparatus 10.

The base station apparatus 20 communicates with the core network 30 in the U plane and the C plane. More specifically, the core network 30 includes a plurality of logical nodes including an Access and Mobility Management Function (AMF) and a User Plane Function (UPF). The base station apparatus 20 connects to the AMF in the C plane, and connects to the UPF in the U plane.

The base station apparatus 20 may be a gNB that provides the terminal apparatus 10 with the U plane and the C plane conforming to 5G New Radio (NR) specifications of 3GPP and connects to a 5G core network (5GC) of 3GPP, for example. The base station apparatus 20 may be an apparatus conforming to other older or newer specifications of 3GPP.

The base station apparatus 20 may be configured by a plurality of unit apparatuses. For example, the base station apparatus 20 may include a central unit (CU), a distributed unit (DU), and a radio unit (RU).

With a configuration in which a plurality of base station apparatuses 20 are connected to each other, a radio access network (RAN) is formed. The radio access network formed by the base station apparatus 20 being a gNB may be referred to as an NG-RAN. The base station apparatus 20 being a gNB may be referred to as an NG-RAN node.

The plurality of base station apparatuses 20 are connected to each other by a predetermined interface (for example, an Xn interface). More specifically, for example, the plurality of base station apparatuses 20 are connected to each other by an Xn-U interface in the U plane, and are connected to each other by an Xn-C interface in the C plane. Note that the plurality of base station apparatuses 20 may be connected to each other by another interface having a different function and name.

Each base station apparatus 20 is connected to the core network 30 by a predetermined interface (for example, an NG interface). More specifically, for example, each base station apparatus 20 is connected to the UPF of the core network 30 by an NG-U interface in the U plane, and is connected to the AMF of the core network 30 by an NG-C interface in the C plane. Note that each base station apparatus 20 may be connected to the core network 30 by another interface having a different function and name.

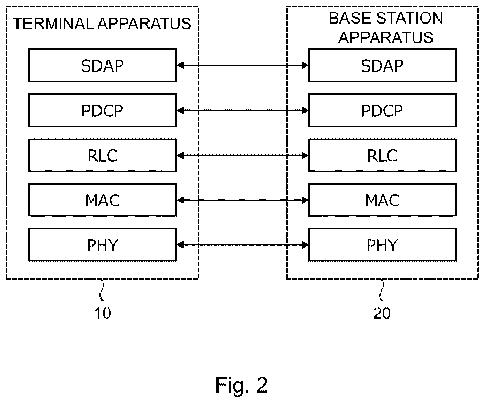

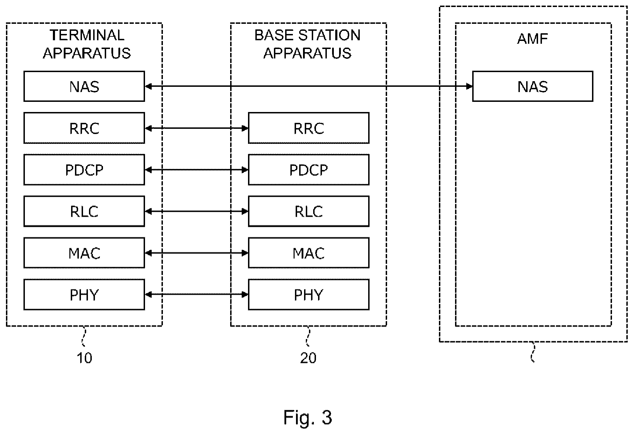

With reference to Fig. 2, a radio protocol architecture between the terminal apparatus 10 and the base station apparatus 20 will be described. With reference to Fig. 3, radio protocol architectures between the terminal apparatus 10 and the base station apparatus 20 and between the terminal apparatus 10 and the core network 30 will be described.

As illustrated in Fig. 2, a protocol stack in the U plane is provided with, in order from the lowest layer, a Physical (PHY) layer, a Media Access Control (MAC) layer, a Radio Link Control (RLC) layer, a Packet Data Convergence Protocol (PDCP) layer, and a Service Data Adaptation Protocol (SDAP) layer. Each of the layers is terminated in the base station apparatus 20 on the network side.

As illustrated in Fig. 3, a protocol stack in the C plane is provided with, in order from the lowest layer, a Physical (PHY) layer, a Media Access Control (MAC) layer, a Radio Link Control (RLC) layer, a Packet Data Convergence Protocol (PDCP) layer, a Radio Resource Control (RRC) layer, and a Non-Access Stratum (NAS). Each of the layers, except the Non-Access Stratum, is terminated in the base station apparatus 20 on the network side. The Non-Access Stratum is terminated in the AMF of the core network 30 on the network side.

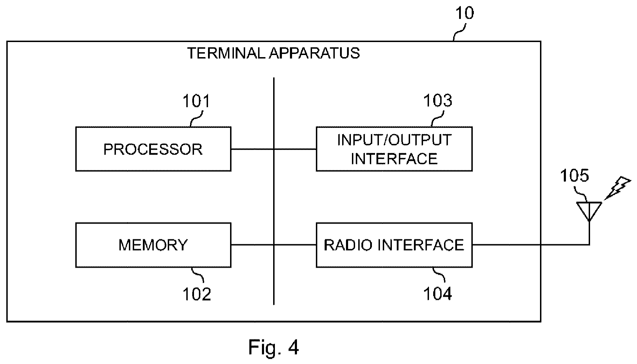

As illustrated in Fig. 4, the terminal apparatus 10 includes, as hardware elements, a processor 101, a memory 102, an input/output interface 103, a radio interface 104, and an antenna 105. The above elements provided in the terminal apparatus 10 are connected to each other via an internal bus. Note that the terminal apparatus 10 may include a hardware element other than the elements illustrated in Fig. 4.

The processor 101 is an arithmetic element that implements various functions of the terminal apparatus 10. The processor 101 may be a central processing unit (CPU), a graphics processing unit (GPU), and a system-on-a-chip (SoC) including an element such as a memory controller.

The memory 102 includes at least one storage medium, such as a random access memory (RAM) and an embedded multi media card (eMMC). The memory 102 is an element that temporarily or permanently stores a program and data used to execute various types of processing in the terminal apparatus 10. The program includes one or more instructions for operations of the terminal apparatus 10. The processor 101 deploys the program stored in the memory 102 into the memory 102 itself and/or a system memory (not illustrated), and executes the program to thereby implement the functions of the terminal apparatus 10.

The input/output interface 103 is an interface that receives an operation to the terminal apparatus 10 and supplies the operation to the processor 101, and presents various pieces of information to a user. The input/output interface 103 is a touch panel, for example.

The radio interface 104 is a circuit that executes various types of signal processing for implementing radio communication, and includes a baseband processor and an RF circuit. The radio interface 104 transmits and receives a radio signal to and from the base station apparatus 20 via the antenna 105.

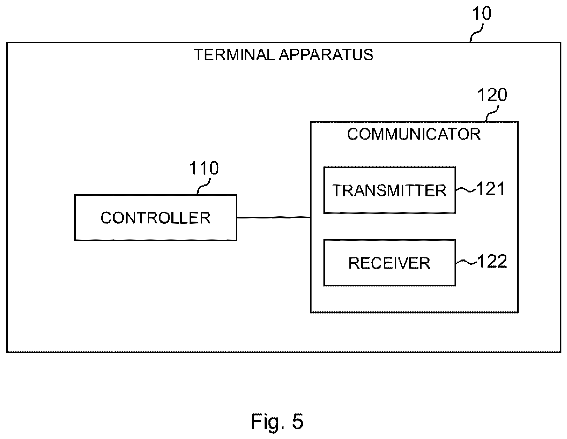

As illustrated in Fig. 5, the terminal apparatus 10 includes, as functional blocks, a controller 110 and a communicator 120. The communicator 120 includes at least one transmitter 121 and at least one receiver 122.

The controller 110 may include at least one processor 101 and at least one memory 102. In other words, the controller 110 may be implemented by the processor 101 and the memory 102. The controller 110 executes various types of control processing in the terminal apparatus 10. For example, the controller 110 controls radio communication with the base station apparatus 20 via the communicator 120. In other words, the controller 110 performs, via the communicator 120, transmission/reception of data/information/message.

The communicator 120 includes the radio interface 104 and the antenna 105. In other words, the communicator 120 is implemented by the radio interface 104 and the antenna 105. The communicator 120 transmits and receives a radio signal to and from the base station apparatus 20, and thereby performs radio communication with the base station apparatus 20. The communicator 120 may include two or more radio interfaces 104 and two or more antennas 105.

When the controller 110 operates, the various types of processing of the terminal apparatus 10 according to the present embodiment are executed.

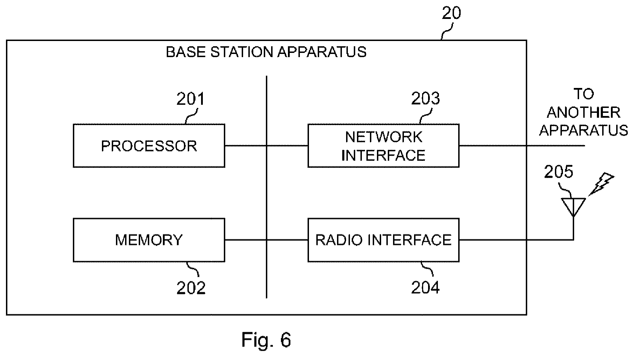

As illustrated in Fig. 6, the base station apparatus 20 includes, as hardware elements, a processor 201, a memory 202, a network interface 203, a radio interface 204, and an antenna 205. The above elements provided in the base station apparatus 20 are connected to each other via an internal bus. Note that the base station apparatus 20 may include a hardware element other than the elements illustrated in Fig. 6.

The processor 201 is an arithmetic element that implements various functions of the base station apparatus 20. The processor 201 may be a CPU, and may further include another processor such as a GPU.

The memory 202 includes at least one storage medium, such as a read only memory (ROM), a RAM, a hard disk drive (HDD), and a solid state drive (SSD). The memory 202 is an element that temporarily or permanently stores a program and data used to execute various types of processing in the base station apparatus 20. The program includes one or more instructions for operations of the base station apparatus 20. The processor 201 deploys the program stored in the memory 202 into the memory 202 itself and/or a system memory (not illustrated), and executes the program to thereby implement the functions of the base station apparatus 20.

The network interface 203 is an interface used to transmit and receive a signal to and from another base station apparatus 20 and the core network 30.

The radio interface 204 is a circuit that executes various types of signal processing for implementing radio communication, and includes a baseband processor and an RF circuit. The radio interface 204 transmits and receives a radio signal to and from the terminal apparatus 10 via the antenna 205.

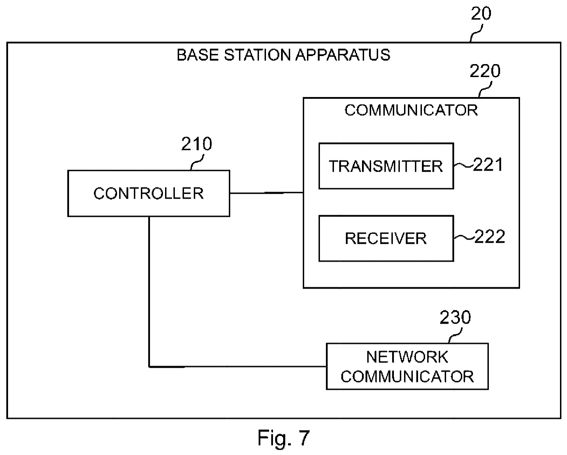

As illustrated in Fig. 7, the base station apparatus 20 includes, as functional blocks, a controller 210, a communicator 220, and a network communicator 230. The communicator 220 includes at least one transmitter 221 and at least one receiver 222.

The controller 210 may include at least one processor 201 and at least one memory 202. In other words, the controller 210 may be implemented by the processor 201 and the memory 202. The controller 210 executes various types of control processing in the base station apparatus 20. For example, the controller 210 controls radio communication with the terminal apparatus 10 via the communicator 220. In other words, the controller 210 performs, via the communicator 220, transmission/reception of data/information/message. For example, the controller 210 controls communication with another node (for example, another base station apparatus 20, a node of the core network 30) via the network communicator 230.

The communicator 220 includes the radio interface 204 and the antenna 205. In other words, the communicator 220 is implemented by the radio interface 204 and the antenna 205. The communicator 220 transmits and receives a radio signal to and from the terminal apparatus 10, and thereby performs radio communication with the terminal apparatus 10. The communicator 220 may include two or more radio interfaces 204 and two or more antennas 205.

The network communicator 230 includes the network interface 203. In other words, the network communicator 230 is implemented by the network interface 203. The network interface 203 transmits and receives a signal to and from the network (ultimately, another node described above).

When the controller 210 operates, the various types of processing of the base station apparatus 20 according to the present embodiment are executed.

1.2. Radio Resources

The terminal apparatus 10 and the base station apparatus 20 perform radio communication with each other, using radio resources in the frequency domain and the time domain. The radio resources will be described below.

A transmission method of downlink communication from the base station apparatus 20 to the terminal apparatus 10 is, for example, orthogonal frequency division multiplexing (OFDM) using a cyclic prefix (CP), that is, CP-OFDM. A transmission method of uplink communication from the terminal apparatus 10 to the base station apparatus 20 is, for example, CP-OFDM described above, or DFTS-OFDM in which CP-OFDM is applied subsequently to transform precoding for performing discrete Fourier transform (DFT) spreading.

The cyclic prefix is a redundant signal that functions as a guard period (GP) for preventing inter-symbol interference and inter-carrier interference, and is inserted at the start of an OFDM symbol. Types of the cyclic prefix include a normal cyclic prefix and an extended cyclic prefix.

As the radio resources in the frequency domain of OFDM, a plurality of subcarriers being orthogonal to each other are used. The plurality of subcarriers are allocated with a predetermined subcarrier spacing (sub-carrier spacing (SCS)) $\Delta f$ in the frequency domain. In the communication system S, a plurality of subcarrier spacings $\Delta f$ may be applied. The subcarrier spacing $\Delta f$ is expressed by the following expression, for example.

$$\Delta f = 2^{\mu} \cdot 15 \, [kHz]$$

Here, $\mu$ is an integer of 0 or greater, and may be any one of values of 0, 1, 2, 3, 4, 5, and 6. Accordingly, the subcarrier spacing $\Delta f$ [kHz] may be any one of values of 15, 30, 60, 120, 240, 480, and 960. Note that $\mu$ may be a value of 7 or greater.

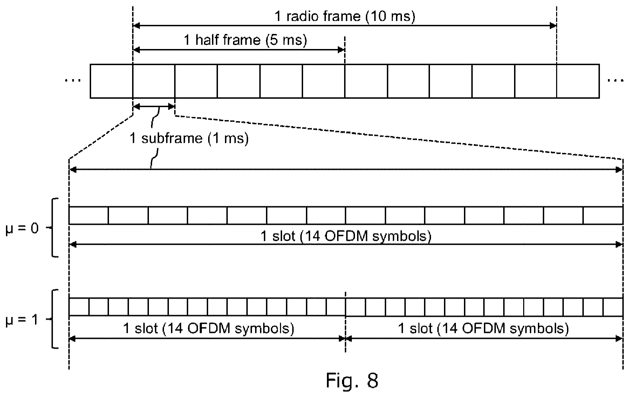

In the time domain of OFDM, as illustrated in Fig. 8, a hierarchical radio frame configuration is used. One radio frame includes 10 subframes. The subframes are numbered with subframe numbers counting up from 0 to 9 by one. One radio frame is divided into two half frames. A time length of the radio frame is 10 ms, a time length of the half frame is 5 ms, and a time length of the subframe is 1 ms. The above time lengths are not dependent upon the subcarrier spacing $\Delta f$.

One subframe includes one or more slots. The number Ns of slots included in one subframe is dependent upon the value of $\mu$ described above, ultimately the subcarrier spacing $\Delta f$. The number Ns of slots is expressed by the following expression, for example.

$$Ns = 2^{\mu}$$

One slot includes a plurality of symbols. The number of symbols included in one slot is dependent upon the type of cyclic prefix. For example, in a configuration in which the normal cyclic prefix is used, one slot includes 14 symbols. For example, in a configuration in which the extended cyclic prefix is used, one slot includes 12 symbols.

As described above, the number of slots and the number of symbols included in each of the radio frame, the half frame, and the subframe having a fixed time length are variable. Accordingly, the time length of the slot and the time length of the symbol are also variable.

A resource element (RE) is a radio resource unit in the time-frequency domain including one subcarrier and one symbol. A resource block (RB) is a radio resource unit in the time-frequency domain including 12 subcarriers and a plurality of symbols.

The radio frames are assigned system frame numbers (SFNs) counted up from 0 to 1023 in increments of 1. The SFN "0" corresponds to an initial SFN value, and the SFN "1023" corresponds to the largest SFN value. Hence, SFN 0 is assigned to a radio frame that follows a radio frame assigned SFN 1023. The time length of the radio frame is 10 ms, and accordingly the time length of one cycle of the system frame number is 10240 ms (= 10.24 seconds).

Here, the base station apparatus 20 may configure one or a plurality of serving cells for the terminal apparatus 10. The serving cell may correspond to a downlink component carrier and/or an uplink component carrier. A technology in which one or a plurality of serving cells are configured and the base station apparatus 20 and the terminal apparatus 10 perform radio communication may also be referred to as carrier aggregation.

The base station apparatus 20 may configure one or a plurality of bandwidth parts (BWPs) for the terminal apparatus 10 for each of one or a plurality of serving cells. For example, in the downlink of one serving cell, a downlink bandwidth part (DL-BWP) may be configured. In the uplink of one serving cell, an uplink bandwidth part (UL-BWP) may be configured. Here, the DL-BWP may include an initial DL-BWP and/or a dedicated DL-BWP. The UL-BWP may include an initial UL-BWP and/or a dedicated UL-BWP. In the following, the BWP may include the DL-BWP and/or the UL-BWP.

1.3. Channels and Control Information

The terminal apparatus 10 and the base station apparatus 20 transmit and receive user data and control information to and from each other. Transmission and reception of downlink and uplink control information will be illustrated below.

The terminal apparatus 10 and the base station apparatus 20 transmit and receive user data and control information, using a plurality of hierarchical channels. A physical channel is a channel used for physical communication between the terminal apparatus 10 and the base station apparatus 20. Examples of physical channels include a physical downlink control channel (PDCCH), a physical broadcast channel (PBCH), and a physical uplink control channel (PUCCH).

A transport channel is a channel located higher than the physical channel, and is mapped to the physical channel in a PHY layer. A plurality of transport channels may be mapped to one physical channel. Examples of the transport channel include a downlink common channel (DownLink Shared Channel, DL-SCH) and an uplink common channel (UpLink Shared Channel, UL-SCH). For example, data in downlink is also referred to as data of the DL-SCH. For example, data in uplink is also referred to as data of the UL-SCH. Here, the data of the DL-SCH includes user data in downlink. The data of the UL-SCH includes user data in uplink.

A logical channel is a channel located higher than the transport channel, and is mapped to the transport channel in the MAC layer. A plurality of logical channels may be mapped to one transport channel, and one logical channel may be mapped to a plurality of transport channels. The logical channels are classified by characteristics of information to be transmitted. Examples of logical channels include a broadcast control channel (BCCH), a common control channel (CCCH), and a dedicated control channel (DCCH).

The base station apparatus 20 transmits downlink control information (DCI) to the terminal apparatus 10, using the PDCCH being a physical channel. The DCI includes information related to downlink and uplink resource allocations to the terminal apparatus 10 and other control information of the terminal apparatus 10. The DCI is mapped to the PDCCH, and corresponds to layer 1 signaling.

Here, regarding transmission of the DCI on the PDCCH, one or a plurality of formats may be defined. A format defined regarding transmission of the DCI on the PDCCH may be referred to as a DCI format. For example, the DCI format may include a DCI format (for example, a format referred to as DCI format 1_0, DCI format 1_1, and/or DCI format 1_2) used for scheduling of a physical downlink shared channel (PDSCH). For example, the DCI format may include a DCI format (for example, a format referred to as DCI format 0_0, DCI format 0_1, and/or DCI format 0_2) used for scheduling of a physical uplink shared channel (PUSCH). The DCI format may include a DCI format not used for scheduling of the PDSCH and/or the PUSCH. The DCI format used for scheduling of the PDSCH and/or the PUSCH may be referred to as a scheduling DCI format. The DCI format not used for scheduling of the PDSCH and/or the PUSCH may be referred to as a non-scheduling DCI format. In the present embodiment, for the sake of simplicity of description, the "DCI format" may be simply referred to as the "PDCCH". The "DCI generated according to the DCI format" may be simply referred to as the "DCI format".

For example, the base station apparatus 20 may configure frequency domain resources and/or time domain resources for the terminal apparatus 10 to monitor a PDCCH candidate set. For example, the frequency domain resources in which the terminal apparatus 10 monitors the PDCCH candidate set may be referred to as a control resource set (CORESET). The time domain resources in which the terminal apparatus 10 monitors the PDCCH candidate set may be referred to as a search space set (SSS). The terminal apparatus 10 may monitor the PDCCH candidate set in one or a plurality of CORESETs in the DL-BWP of the serving cell configured with PDCCH monitoring according to a corresponding search space set. Here, to monitor may connote to attempt to decode each of the PDCCH candidates according to the monitored DCI format. The configuration described above may be referred to as blind decoding.

Here, a cyclic redundancy check (CRC) scrambled using a radio network temporary identifier (RNTI) may be added to the DCI (or the DCI format) to be transmitted on the PDCCH. The CRC may also be referred to as a CRC parity bit. A plurality of types of RNTIs are defined. For example, the base station apparatus 20 may transmit an RRC message including at least one of information indicating a Cell-RNTI (C-RNTI), information indicating a Modulation and Coding Scheme Cell-RNTI (MCS-C-RNTI), and information indicating a Configured Scheduling-RNTI (CS-RNTI) to thereby configure each RNTI. In other words, a CRC scrambled using at least one of the C-RNTI, the MCS-C-RNTI, and the CS-RNTI may be added to the DCI (or the DCI format) to be transmitted on the PDCCH.

The terminal apparatus 10 may monitor (and/or receive) the PDCCH and detect (and/or receive) the DCI format.

The terminal apparatus 10 transmits, to the base station apparatus 20, uplink control information (UCI) by using a PUCCH being a physical channel. The UCI includes control information such as a scheduling request (SR), an Ack/Nack in hybrid automatic repeat request (HARQ), and channel state information (CSI). The UCI is mapped to the PUCCH or the PUSCH, and corresponds to Layer 1 signaling.

The base station apparatus 20 transmits, to the terminal apparatus 10, a control element (CE) of a MAC layer by using a DL-SCH being a transport channel. The downlink MAC CE is mapped to a PDSCH via the DL-SCH, and corresponds to Layer 2 signaling.

The terminal apparatus 10 transmits, to the base station apparatus 20, a control element (CE) of a MAC layer by using a UL-SCH being a transport channel. The uplink MAC CE includes control information such as buffer status reporting (BSR). The uplink MAC CE is mapped to a PUSCH via the UL-SCH, and corresponds to Layer 2 signaling.

The base station apparatus 20 transmits (or broadcasts) system information (SI) to the terminal apparatus 10, using the BCCH being a logical channel. The SI includes minimum system information (MSI) and other system information (OSI). The MSI includes a master information block (MIB) and a system information block 1 (SIB1). The SIB1 may be referred to as remaining minimum system information (RMSI). The OSI includes system information blocks (from SIB2), other than the SIB1. Of the BCCH, the MIB is mapped to the PBCH via the broadcast channel (BCH), and the SIB is mapped to the PDSCH via the DL-SCH.

The base station apparatus 20 transmits control information in the RRC layer to the terminal apparatus 10, using a signaling radio bearer (SRB) established between the terminal apparatus 10 and the base station apparatus 20 in the RRC layer. A message exchanged between the base station apparatus 20 and the terminal apparatus 10 in the RRC layer may be hereinafter referred to as an RRC message. A plurality of types of SRBs (for example, SRB0, SRB1, SRB2, SRB3, and SRB4) are present. The SRB is used to transmit and receive a NAS message including control information in the NAS layer, other than the RRC message. To transmit the RRC message from the base station apparatus 20 to the terminal apparatus 10, the CCCH or the DCCH is used. The CCCH and the DCCH are each mapped to the PDSCH via the DL-SCH. The RRC message corresponds to layer 3 signaling.

As an example of a downlink RRC message, an RRC reconfiguration (RRCReconfiguration) message will be described. The RRC reconfiguration message is an RRC message transmitted from the base station apparatus 20 to the terminal apparatus 10 using SRB1 or SRB3. The DCCH is used to transmit the RRC reconfiguration message. The RRC reconfiguration message is used to perform reconfiguration or modification of connection between the base station apparatus 20 and the terminal apparatus 10.

The terminal apparatus 10 transmits the RRC message to the base station apparatus 20, using the SRB described above. To transmit the RRC message from the terminal apparatus 10 to the base station apparatus 20, the CCCH or the DCCH is used. The CCCH and the DCCH are each mapped to the PUSCH via the UL-SCH. The RRC message corresponds to layer 3 signaling.

As an example of an uplink RRC message, a user equipment capability information (UECapabilityInformation) message will be described. The user equipment capability information message is an RRC message transmitted from the terminal apparatus 10 to the base station apparatus 20 using SRB1. The DCCH is used to transmit the user equipment capability information message. The user equipment capability information message is used to notify the base station apparatus 20 of information related to a radio access capability of the terminal apparatus 10.

As an example of an uplink RRC message, a user equipment assistance information (UEAssistanceInformation) message will be described. The user equipment assistance information message is an RRC message transmitted from the terminal apparatus 10 to the base station apparatus 20 using SRB1 or SRB3. The DCCH is used to transmit the user equipment assistance information message. The user equipment assistance information message is used to notify the base station apparatus 20 of various pieces of information (UE assistance information) related to the terminal apparatus 10.

1.4. Uplink Scheduling

1.4.1. Scheduling Request (SR)

An SR is used for the terminal apparatus 10 to request PUSCH radio resource allocation from the base station apparatus 20. An SR may be used for request of a UL-SCH resource for initial transmission. The base station apparatus 20 allocates, to the terminal apparatus 10, a PUCCH resource for transmission of the SR. The base station apparatus 20 transmits, to the terminal apparatus 10, an RRC message including a parameter for the SR. The parameter for the SR is included in an information element (IE) "SchedulingRequestResourceConfig" being an example of an IE for RRC.

The terminal apparatus 10 transmits, to the base station apparatus 20, UCI including the SR by using the configured PUCCH resource. The terminal apparatus 10 may transmit the UCI on demand. The terminal apparatus 10 may transmit the UCI with a configured periodicity. For example, the terminal apparatus 10 may transmit the SR set to "0" (negative SR) and/or the SR set to "1" (positive SR). In accordance with the SR, the base station apparatus 20 allocates a PUSCH radio resource to the terminal apparatus 10.

1.4.2. Dynamic Grant (DG)

A DG is a scheduling method of allocating a PUSCH radio resource in accordance with an uplink grant procedure. The base station apparatus 20 transmits, to the terminal apparatus 10, an uplink grant on a PDCCH. The terminal apparatus 10 performs transmission of a PUSCH in accordance with the uplink grant. For example, the base station apparatus 20 may allocate a PUSCH radio resource by using a C-RNTI and/or a DCI format with a CRC scrambled with an MCS-C-RNTI (i.e., DCI format used for scheduling of the PUSCH), and the terminal apparatus 10 may perform uplink transmission by using the PUSCH radio resource allocated. Here, a new data indicator to be included in the C-RNTI and/or the DCI format with the CRC scrambled with the MCS-C-RNTI may be set to 0 or 1. The base station apparatus 20 may allocate a PUSCH radio resource by using a DCI format with a CRC scrambled with a CS-RNTI (i.e., DCI format used for scheduling of the PUSCH), and the terminal apparatus 10 may perform uplink transmission by using the PUSCH radio resource allocated. A new data indicator to be included in the DCI format with the CRC scrambled with the CS-RNTI may be set to 1.

1.4.3. Configured Grant (CG)

A CG is a scheduling method of allocating a PUSCH radio resource without the dynamic uplink grant procedure. The CG includes two types, type 1 and type 2. The base station apparatus 20 transmits, to the terminal apparatus 10, an RRC message including a parameter for the CG. The parameter for the CG is included in an information element (IE) "ConfiguredGrantConfig" being an example of an IE for RRC. The IE "ConfiguredGrant-Config" includes a parameter "periodicity" related to a periodicity of transmission using a PUSCH. Note that the parameter "periodicity" is configured in units of the number of slots or number of symbols. Alternatively, the parameter "periodicity" may be configured in units of Frame Per Second (FPS). For type 1, the terminal apparatus 10 initiates transmission of a signal with a configured periodicity, without any trigger by DCI. In contrast, for type 2, the base station apparatus 20 transmits, to the terminal apparatus 10, DCI scrambled with a CS-RNTI. The CS-RNTI is used for activation of periodic transmission. In accordance with such activation by the DCI scrambled with the CS-RNTI, the terminal apparatus 10 initiates transmission using a PUSCH with a configured periodicity.

1.4.4. Buffer Status Report (Buffer Status Reporting (BSR))

The terminal apparatus 10 transmits, using an allocated PUSCH radio resource, a BSR by using MAC signaling. The BSR is configured with a MAC CE included in a medium access control protocol data unit (MAC PDU). The BSR indicates information related to a buffer status of uplink data of a MAC entity. Based on the BSR, the base station apparatus 20 performs radio resource allocation for uplink with respect to the terminal apparatus 10.

In the BSR, a logical channel (LCH) is allocated to a logical channel group (LCG). Each LCG includes one or more logical channels. The terminal apparatus 10 calculates, for each LCG, a buffer size of uplink data. The terminal apparatus 10 transmits, to the base station apparatus 20, the buffer size corresponding to each LCG as the BSR.

The base station apparatus 20 transmits, to the terminal apparatus 10, an RRC message including a parameter for the BSR. The parameter for the BSR is included in an information element (IE) "BSR-Config" being an example of an IE for RRC. For example, the IE "BSR-Config" includes three timers, "periodicBSR-Timer", "retxBSR-Timer", and "logicalChannelSR-Delay-Timer".

A parameter associated with an LCG is included in an information element (IE) "LogicalChannelConfig" being an example of an IE for RRC. In other words, the base station apparatus 20 may transmit an RRC message including the IE "LogicalChannelConfig". Based on the IE "LogicalChannelConfig" included in the RRC message, the terminal apparatus 10 may identify a configuration related to a logical channel and/or LCG. For example, the IE "LogicalChannelConfig" includes an IE "logicalChannelGroup". With the IE "logicalChannelGroup", a logical channel is allocated to an LCG. For example, for each of one or a plurality of logical channels, an LCG index (ID) may be configured, and an LCG that such one or a plurality of logical channels belong to may be configured. Note that the IE "LogicalChannelConfig" may include an IE "logicalChannelGroupIAB-Ext". The IE "logicalChannelGroupIAB-Ext" is applied only to an Integrated Access Backhaul-Mobile Termination (IAB-MT). In a case where the IE "logicalChannelGroupIAB-Ext" is configured, the IE "LogicalChannelConfig" is ignored.

The terminal apparatus 10 may trigger the BSR in accordance with a certain condition. For example, for an activated cell group, the terminal apparatus 10 may trigger the BSR when any of the following conditions (a1) to (a4) is satisfied. Note that the following conditions may be referred to as "events".

(a1) For a logical channel belonging to a certain LCG, uplink data becomes available to a MAC entity, and either one of the following two is satisfied:

- the uplink data belongs to a logical channel with higher priority than the priorities of any logical channels including available uplink data that belong to any LCG; or
- none of the logical channels that belong to an LCG includes any available uplink data.

(a2) Uplink resources are allocated and the number of padding bits is equal to or larger than a size of a BSR MAC CE plus its subheader.
(a3) "retxBSR-Timer" expires and at least one of the logical channels belonging to an LCG includes uplink data.
(a4) "periodicBSR-Timer" expires.

The BSR includes Regular BSR, Padding BSR, and Periodic BSR, at least. Regular BSR, Padding BSR, and Periodic BSR may each be triggered based on a different condition. For example, the terminal apparatus 10 triggers Regular BSR in a case where either of the condition (a1) or (a3) is satisfied. The terminal apparatus 10 triggers Padding BSR in a case where the condition (a2) is satisfied. The terminal apparatus 10 triggers Periodic BSR in a case where the condition (a4) is satisfied.

The BSR includes a plurality of formats. The plurality of formats include Short BSR and Long BSR, at least. A MAC PDU including the BSR includes a MAC subheader. The MAC subheader includes a logical channel identifier (LCID) or an extended logical channel identifier (eLCID). The value of LCID or eLCID may be referred to as a codepoint. Short BSR and Long BSR are each identified by a codepoint value.

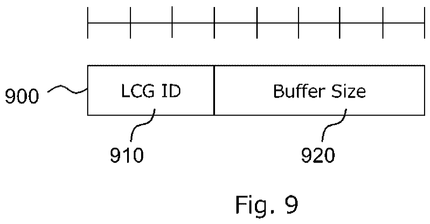

Short BSR is a format for reporting of a buffer status (i.e., buffer size) of one LCG. As illustrated in Fig. 9, the Short BSR includes one field 900 having a fixed size of 8 bits. The field 900 includes a first part 910 and a second part 920.

The first part 910 consists of 3 bits. The first part 910 is information for identification of an LCG whose buffer status is to be reported. The first part 910 may be referred to as "LCG ID field".

The second part 920 consists of 5 bits. The second part 920 is information for identification of the total amount of data available for all the logical channels included in the LCG indicated by the first part 910. The second part 920 may be simply referred to as "buffer size". The second part 920 indicates an index indicating the number of bytes. For example, the second part 920 indicates any one of values 0 to 31.

Note that Short BSR may include Truncated format and Extended format, the Truncated format being a format for a high priority logical channel and the Extended format being a format that allows more amount of information to be transmitted.

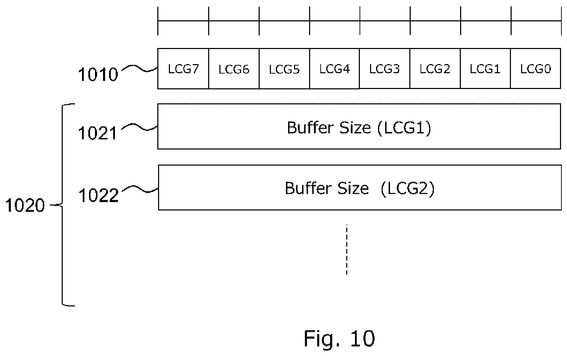

Long BSR is a format for reporting of buffer statuses (i.e., buffer sizes) of a plurality of LCGs. As illustrated in Fig. 10, the Long BSR has a variable size. The Long BSR includes an LCG field 1010 and a buffer size field 1020.

The LCG field 1010 consists of 8 bits. In the LCG field 1010, the 8 bits correspond to the respective eight LCGi. Here, i is an integer from 0 to 7. The same definition of i applies to the description hereinafter. The LCG field 1010 may indicate whether a buffer size field for LCGi is present. For example, in a case where, in the LCG field 1010, the value of LCGi is 1, this indicates presence of the buffer size field corresponding to LCGi. In a case where the value of LCGi is 0, this indicates absence of the buffer size field corresponding to LCGi.

The number of fields included in the buffer size field 1020 is variable depending on the value of the LCG field 1010. In the example of Fig. 10, in the LCG field 1010, it is assumed that a bit corresponding to LCG 1 is 1 and a bit corresponding to LCG 2 is 1. Thus, the buffer size field 1020 includes a field 1021 corresponding to LCG 1 and a field 1022 corresponding to LCG 2. Note that, since a bit corresponding to LCG 0 is assumed to be 0 in Fig. 10, no field corresponding to LCG 0 is included in the buffer size field 1020.

Each field included in the buffer size field 1020 consists of 8 bits. Each field indicates an index indicating the number of bytes. For example, each field indicates any one of values 0 to 254.

Note that, similarly to Short BSR, Long BSR may include Truncated format and Extended format.

The BSR may include Pre-emptive BSR format and Extended Pre-emptive BSR format. These formats are used for an IAB-MT.

The terminal apparatus 10 may select either Short BSR or Long BSR, in accordance with a certain method. For example, in a case of Regular BSR and Periodic BSR, the terminal apparatus 10 may select either Short BSR or Long BSR as below. In a case where two or more LCGs have data (available data) available for transmission when a MAC PDU including a BSR is built, the terminal apparatus 10 transmits Long BSR for all the LCGs having the available data. Otherwise, the terminal apparatus 10 transmits Short BSR.

In a case of Regular BSR and Periodic BSR, with respect to a MAC entity configured with an IE "logicalChannelGroup-IABExt" by an upper layer, the terminal apparatus 10 may select either Short BSR or Long BSR as below. In a case where two or more LCGs have data available for transmission and the maximum value of LCG ID among the configured LCGs is 7 or lower, the terminal apparatus 10 transmits Long BSR for all the LCGs having the available data. In a case where two or more LCGs have data available for transmission and the maximum value of LCG ID among the configured LCGs is higher than 7, the terminal apparatus 10 transmits Extended Long BSR for all the LCGs having the available data. In a case where one or more LCGs have data available for transmission, the terminal apparatus 10 transmits Extended Short BSR.

In a case of Padding BSR, the terminal apparatus 10 may transmit, in accordance with a condition to be satisfied, any one of the following BSR formats.

- Short BSR
- Long BSR
- Short Truncated BSR
- Long Truncated BSR
- Extended Short Truncated BSR
- Extended Long Truncated BSR

Note that, in a case where at least one BSR has been triggered in accordance with any of the conditions (a1) to (a4) and not cancelled, the terminal apparatus 10 may perform processing as below. For example, in a case where UL-SCH resources are available for a new transmission and the UL-SCH resources can accommodate a BSR MAC CE plus its subheader as a result of logical channel prioritization (LCP), the terminal apparatus 10 may generate a BSR MAC CE and transmit the BSR MAC CE.

In a case where Regular BSR has been triggered and "logicalChannelSR-DelayTimer" is not running, when the following condition (b1) or (b2) is satisfied, the terminal apparatus 10 may trigger an SR.

(b1) There is no UL-SCH resource available for a new transmission.
(b2) The UL-SCH resource available for a new transmission does not meet an LCP mapping restriction configured for a logical channel having triggered the BSR.

The LCP mapping restriction may be a restriction described in clause 5.4.3.1 of NPL 2. The restriction may be a restriction configured by RRC. The restriction may include, for example, at least one of a restriction related to an allowed subcarrier spacing for transmission (for example, allowedSCS-List), a restriction related to the maximum PUSCH duration allowed for transmission (for example, maxPUSCH-Duration), a restriction related to whether a CG Type 1 can be used for transmission (for example, configuredGrantType1Allowed), a restriction related to an allowed cell for transmission (for example, allowedServingCells), a restriction related to an allowed CG for transmission (for example, allowedCG-List), a restriction related to an allowed PHY priority index of a dynamic grant (DG) for transmission (for example, allowedPHY-PriorityIndex), or a restriction related to an allowed uplink HARQ mode for transmission (for example, allowedHARQ-mode).

In a case where the following condition (c1) is satisfied, the terminal apparatus 10 may cancel all the triggered BSRs. Furthermore, in a case where the following condition (c2) is satisfied, the terminal apparatus 10 may cancel all the triggered BSRs prior to MAC PDU assembly.

(c1) An uplink grant can accommodate all pending data available for transmission but is not sufficient to additionally accommodate a BSR MAC CE plus its subheader.
(c2) A MAC PDU is transmitted and the MAC PDU includes a Long, Extended Long, Short, or Extended Short BSR MAC CE, the BSR MAC CE including a buffer status up to (and including) the last event that has triggered a BSR prior to the MAC PDU assembly.

## 1.5. Extended Reality (eXtended Reality, XR)

Characteristics of traffic generated in XR will be described. In XR, a plurality of types of data (video data, voice data, user data, control data, and the like) are transmitted and received in parallel. A plurality of data streams corresponding to the data segments have different traffic characteristics and quality of service (QoS) requirements.

At timings of transmission and reception of the data, time shifts expressed as jitter, variability, and fluctuation may occur due to factors such as encoding of a video and audio and network latency.

Reference Literature 1 describes that the following definitions can be introduced for transmission and reception in XR.

[Reference Literature 1] 3GPP TR 23.700-60 V1.1.0 (2022-09)

PDU set: a set of PDUs including one or more PDUs carrying a payload of one unit of information generated at an application level. The application level corresponds, for example, to a frame or a video slice in an XR service.

Data burst: a set of datamultiple PDUs generated and sent by an application in a short period of time.

Furthermore, for XR, requirements of a packet delay budget (PDB) as the QoS requirements have been studied. The PDB is an upper bound of packet delay time allowed between the terminal apparatus 10 and the UPF. Note that Reference Literature 1 also describes that the following new QoS parameters can be introduced.

PDU-set delay budget (PSDB): an upper bound of PDU-set delay time allowed between the terminal apparatus 10 and the UPF.

PDU-set error rate (PSER): an upper bound of an error rate calculated between a PDU set processed by a sender, and all the PDUs in a PDU set that has not successfully delivered to an upper layer of a corresponding receiver.

## 1.6. Delay Information Report

### 1.6.1. Basic Configuration

As described above, in the BSR described in NPLs 2 and 3, the terminal apparatus can only transmit one piece of information (i.e., information related to a buffer size) for certain data (i.e., uplink data corresponding to one LCG). Such small amount of information reported to the base station apparatus may prevent the base station apparatus from appropriately allocating a radio resource to the terminal apparatus.

In view of this, the present embodiment provides a procedure for the terminal apparatus 10 to transmit information related to delay. Hereinafter, "information related to delay" is referred to as "delay information". The terminal apparatus 10 transmits, to the base station apparatus 20, a report including delay information regarding certain data. Hereinafter, "report including delay information" is referred to as "delay information report". The delay information report may be referred to as "Delay Status Report (DSR)".

The certain data means a unit of data to be reported in the delay information report. Hereinafter, the certain data may be referred to as "data to be reported" or "unit of data to be reported". Such a configuration allows the terminal apparatus 10 to transmit, to the base station apparatus 20, delay information regarding data to be reported.

The unit of data to be reported may be data corresponding to one LCG. Such one LCG may include one or a plurality of LCHs (i.e., data corresponding to one or a plurality of LCHs). In this configuration, the unit of data to be reported may be a part or all of the data available for one LCG. Note that the unit of data to be reported may be data corresponding to one LCH. The unit of data to be reported may be a part or all of the data available for one LCH.

The unit of data to be reported may be data corresponding to one PDU. In this configuration, the unit of data to be reported may be a part or all of the data available for one PDU. The unit of data to be reported may be data corresponding to one PDU set. In this configuration, the unit of data to be reported may be a part or all of the data available for one PDU set. Furthermore, the unit of data to be reported may be data corresponding to a plurality of PDU sets. For example, the unit of data to be reported may be data (or a part of data) available for one or a plurality of or all PDUs (or PDU sets) belonging to one PDU set.

The unit of data to be reported may be data corresponding to one data burst. In this configuration, the unit of data to be reported may be a part or all of the data available for one data burst. Note that the unit of data to be reported may be data corresponding to a plurality of data bursts. For example, the unit of data to be reported may be data (or a part of data) available for one or a plurality of or all data segments (or data bursts) belonging to one data burst.

The delay information may be information explicitly indicating delay. For example, the delay information may be a delay time. The delay information may be an index indicating a delay time.

The delay information may be information related to another time. For example, the delay information may be information related to a time limit of transmission of data. The time limit of transmission may be referred to as "transmission deadline" or "upper bound of delay".

The delay information may be a remaining time until a certain first time limit is reached. The first time limit may be a time limit until when transmission of a part or all of the data to be reported is to be completed. For example, the first time limit may be the earliest time limit out of a plurality of time limits until when transmission of a part of the data to be reported is to be completed. The first time limit may be a time limit determined based on a PDB or PSDB. The PDB or PSDB may be determined based on a corresponding QoS flow. The PDB or PSDB may be provided for the terminal apparatus 10 by the core network 30. The first time limit related to a PDU set may be a value obtained by adding a PDB or PSDB of a corresponding QoS flow to a time when data corresponding to a PDU in the PDU set is firstly buffered for the terminal apparatus 10 or a time when the data firstly arrives at a MAC entity. The first time limit related to a data burst may be a value obtained by adding a PDB or PSDB of a corresponding QoS flow to a time when data corresponding to a PDU included in the data burst is firstly buffered for the terminal apparatus 10 or a time when the data firstly arrives at a MAC entity.

The remaining time may be a value obtained by subtracting, from the PDB or PSDB of the corresponding QoS flow, a period of time during when the certain data (i.e., data to be reported) is buffered in the terminal apparatus 10.

The remaining time may be a period of time from a certain first time to the first time limit. The first time may be a current time. The first time may be a time when an uplink grant for transmission of the delay information report is allocated to. The first time may be a time when the certain data (i.e., data to be reported) is buffered for the terminal apparatus 10. The first time may be a time when the data to be reported arrives at a MAC entity in the terminal apparatus 10. In such a configuration, the first time limit may be obtained by adding a PDB or PSDB to the first time.

The delay information may be information implicitly indicating delay. For example, the delay information may be information related to data provided with a temporal restriction or requirement among the data to be reported. Hereinafter, all the data to be reported is referred to as "first data" and the data provided with the temporal restriction or requirement among the data to be reported is referred to as "second data". The delay information may be information related to a size of the second data. For example, the delay information may be an index indicating the number of bytes of the second data.

The second data may be data to be transmitted prioritized. The second data may be referred to as urgent data. The second data may be data that satisfies a condition related to delay. For example, the second data may be data configured with the first time limit. The second data may be data of which the remaining time is equal to or shorter than a certain first threshold Th1. The base station apparatus 20 may transmit, to the terminal apparatus 10, an RRC message including information indicating the first threshold Th1. The first threshold Th1 may be configured for an LCH. For example, the first threshold Th1 may be configured as a new element of the IE "LogicalChannelConfig". The first threshold Th1 may be configured for an LCG. For example, the first threshold Th1 may be configured as a new element of the IE "logicalChannelGroup". The first threshold Th1 may be configured for a PDU or PDU set. The first threshold Th1 may be configured for an IE related to the PDU or PDU set included in the RRC message. The first threshold Th1 may be configured for a data burst. The first threshold Th1 may be configured for an IE related to the data burst included in the RRC message. Note that the base station apparatus 20 may transmit, to the terminal apparatus 10, system information (SI, for example, SIB1 and/or SIB other than SIB1) including information indicating the first threshold Th1.

The base station apparatus 20 may transmit, to the terminal apparatus 10, DCI including information indicating the first threshold Th1.

In another example, the second data may be data provided with a restriction or requirement related to a time shift in delay such as jitter. In still another example, the second data may be data provided with a restriction or requirement for a transmission rate.

Based on a size of the second data, the base station apparatus 20 can determine a degree of delay. In a case where the second data has a size larger than a certain size, the base station apparatus 20 may determine there is delay in transmission by the terminal apparatus 10. In a case where the second data has a size of the certain size or smaller, the base station apparatus 20 may determine there is no delay in transmission by the terminal apparatus 10.

1.6.2. Configuration of Delay Information Report

The terminal apparatus 10 may transmit, as the delay information report, a MAC CE including the delay information. For example, the terminal apparatus 10 may transmit a BSR including the delay information report. In this configuration, the terminal apparatus 10 may transmit the BSR including the delay information report in accordance with the following procedure.

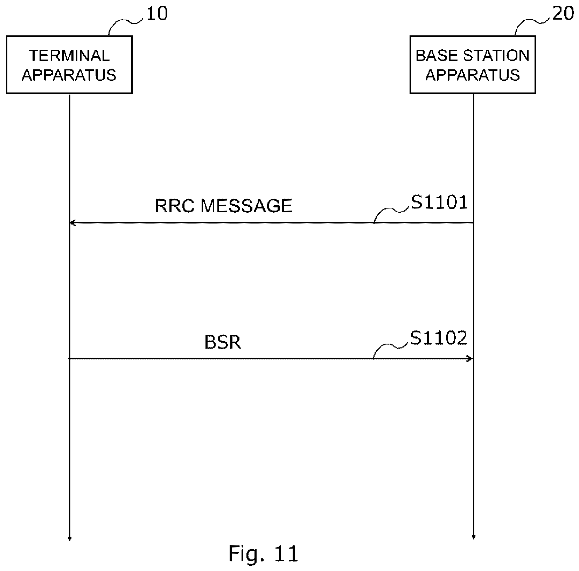

As illustrated in Fig. 11, the communicator 220 in the base station apparatus 20 transmits, to the terminal apparatus 10, an RRC message (S1101). The RRC message includes a parameter related to a BSR. The RRC message may be an RRC reconfiguration (RRCReconfiguration) message. Based on the parameter included in the RRC message, the controller 110 in the terminal apparatus 10 generates a BSR. The BSR includes buffer size information related to a buffer size and delay information. The communicator 120 in the terminal apparatus 10 transmits the BSR (S1102).

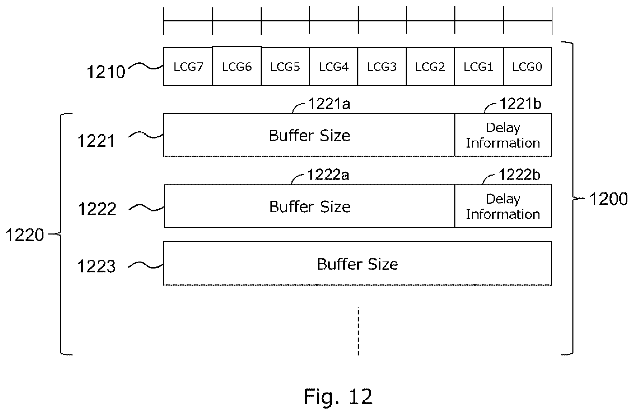

The terminal apparatus 10 may transmit Long BSR 1200 illustrated in Fig. 12. The Long BSR 1200 includes a first field 1210 and a second field 1220.

The first field 1210 may have a configuration the same as that of the LCG field 1010 in Fig. 10. The first field 1210 may be a field indicating whether LCGi has available data. For example, in a case where, in the first field 1210, the value of LCGi is 1, this may indicate that LCGi has available data. In a case where the value of LCGi is 0, this may indicate that LCGi has no available data.

In the present example, the second field 1220 includes three fields 1221 to 1223.

The field 1221 is a field related to LCG 1. The field 1221 includes a first part 1221a and a second part 1221b. In the present example, the first part 1221a has 6 bits and the second part 1221b has 2 bits. Note that, not limited to this configuration, the first part 1221a and the second part 1221b may each include the number of bits different from that in this example.

The first part 1221a indicates a buffer size related to data corresponding to LCG 1. For example, the first part 1221a may be an index indicating the number of bytes. The controller 110 may reference to a first buffer size table for 6 bits, in order to configure an index for the first part 1221a. The first buffer size table is a table that defines a correspondence relationship between buffer sizes and indices.

The second part 1221b indicates the delay information related to the data corresponding to LCG 1. The second part 1221b may be an index indicating the delay information. The controller 110 may reference to a delay information table for 2 bits, in order to configure an index for the second part 1221b. The delay information table is a table that defines a correspondence relationship between delay information and indices.

The field 1222 is a field related to LCG 2. The field 1222 includes a first part 1222a and a second part 1222b. The first part 1222a and second part 1222b have a configuration the same as that of the first part 1221a and second part 1221b described above.

The field 1223 is a field related to LCG 3. The field 1223 indicates a buffer size related to data corresponding to LCG 3. Regarding the data corresponding to LCG 3, it is assumed that the remaining time is longer than the first threshold Th1. In other words, the data corresponding to LCG 3 has no delay. In this case, the field 1223 may include the information related to the buffer size and include no delay information. The controller 110 may reference to a second buffer size table for 8 bits, in order to configure an index for the field 1223. The second buffer size table is a table that defines a correspondence relationship between buffer sizes and indices. As described above, in order to configure an index corresponding to the information related to the buffer size, the controller 110 may switch a table for use between the first buffer size table and the second buffer size table.

Note that, in the example described above, although the second field 1220 includes the three fields 1221 to 1223, the configuration is not limited to this. The number of fields included in the second field 1220 may be variable. In another example, the order of fields included in the second field 1220 may be determined based on their priorities.

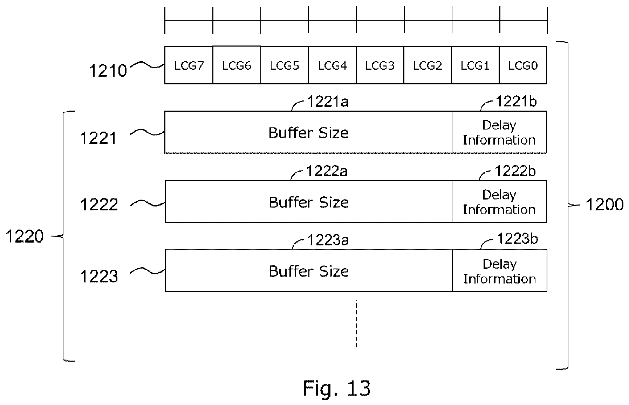

As illustrated in Fig. 13, each of the fields 1221 to 1223 included in the second field 1220 may include a first part corresponding to the information related to the buffer size and a second part corresponding to the delay information. Hereinafter, only details different from that of the configuration in Fig. 12 are described, and description on details the same as that of the configuration in Fig. 12 is omitted.

The field 1223 is a field related to LCG 3. The field 1223 includes a first part 1223a and a second part 1223b. In the present example, the first part 1223a has 6 bits and the second part 1223b has 2 bits. For example, the first part 1223a may be an index indicating the number of bytes. The controller 110 may reference to the first buffer size table, in order to configure an index for the first part 1223a. As described above, regarding the data corresponding to LCG 3, it is assumed that the remaining time is longer than the first threshold Th1. In this case, the second part 1223b may be blank. In another example, the second part 1223b may be a value (or index) indicating that no delay information is reported.

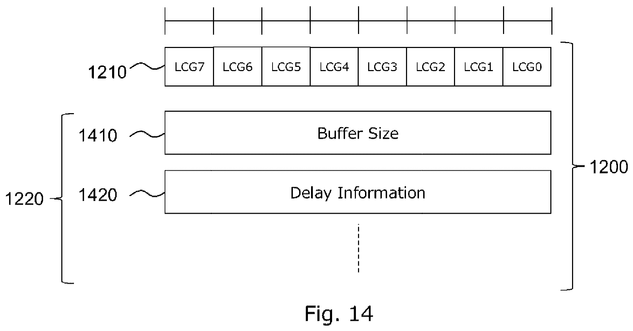

Furthermore, the configuration of the second field 1220 is not limited to the examples described above. As illustrated in Fig. 14, the second field 1220 may include a field 1410 of 8 bits corresponding to the information related to the buffer size and a field 1420 of 8 bits corresponding to the delay information. For example, the field 1410 indicates the information related to the buffer size of the data corresponding to LCG 1 and the field 1420 indicates the delay information related to the data corresponding to LCG 1. As described above, such buffer size information and delay information related to one LCG may be indicated with two different fields.

In the examples described above, although a configuration of Long BSR is described, the configuration is not limited to the examples. The configuration described above may be applied to Short BSR. For example, the terminal apparatus 10 may transmit Short BSR including the delay information (for example, a buffer size of the second data).

Note that, although a configuration of a BSR including the delay information report is described, the configuration is not limited to this. A new MAC CE for transmission of the delay information may be defined. For example, the terminal apparatus 10 may transmit, as the delay information report, a MAC CE including the delay information. Thus, "transmission of a BSR including delay information" described in the Specification may be replaced with "transmission of a MAC CE including the delay information".

The terminal apparatus 10 may receive, from the base station apparatus 20, first configuration information related to the delay information report. The base station apparatus 20 may transmit, to the terminal apparatus 10, an RRC message including the first configuration information. The base station apparatus 20 may transmit, to the terminal apparatus 10, system information (SI, for example, SIB1 and/or SIB other than SIB1) including the first configuration information. The base station apparatus 20 may transmit, to the terminal apparatus 10, DCI including the first configuration information.

The first configuration information may be "information indicating whether to transmit the delay information". The first configuration information may indicate "transmission of the delay information" or "no transmission of the delay information". The first configuration information may be a flag indicating "transmission of the delay information" or "no transmission of the delay information". For example, in a case where the RRC message includes the first configuration information, the terminal apparatus 10 may transmit the delay information. In a case where the RRC message does not include the first configuration information, the terminal apparatus 10 may transmit no delay information. The first configuration information may be configured for an LCH. The terminal apparatus 10 may determine whether to include the delay information related to an LCH in a BSR, based on the first configuration information configured for the LCH. For example, in a case where the first configuration information indicates transmission of the delay information for a certain LCH, the terminal apparatus 10 may include the delay information related to the LCH in a BSR. For example, the first configuration information may be configured as a new element of the IE "LogicalChannelConfig". The first configuration information may be configured for an LCG. The terminal apparatus 10 may determine whether to include the delay information related to an LCG in a BSR, based on the first configuration information configured for the LCG. For example, in a case where the first configuration information indicates transmission of the delay information for a certain LCG, the terminal apparatus 10 may include the delay information related to the LCG in a BSR. For example, the first configuration information may be configured as a new element of the IE "logicalChannelGroup". The first configuration information may be configured for a PDU or PDU set. The terminal apparatus 10 may determine whether to include the delay information related to a PDU or PDU set in a BSR, based on the first configuration information configured for the PDU or PDU set. For example, in a case where the first configuration information indicates transmission of the delay information for a certain PDU or PDU set, the terminal apparatus 10 may include the delay information related to the PDU or PDU set in a BSR. The first configuration information may be configured for an IE related to the PDU or PDU set included in the RRC message. The first configuration information may be configured for a data burst. The terminal apparatus 10 may determine whether to include the delay information related to a data burst in a BSR, based on the first configuration information configured for the data burst. For example, in a case where the first configuration information indicates transmission of the delay information for a certain data burst, the terminal apparatus 10 may include the delay information related to the data burst in a BSR. The first configuration information may be configured for an IE related to the data burst included in the RRC message.

The terminal apparatus 10 may receive, from the base station apparatus 20, second configuration information related to the delay information report. The base station apparatus 20 may transmit, to the terminal apparatus 10, an RRC message including the second configuration information. The base station apparatus 20 may transmit, to the terminal apparatus 10, system information (SI, for example, SIB1 and/or SIB other than SIB1) including the second configuration information. The base station apparatus 20 may transmit, to the terminal apparatus 10, DCI including the second configuration information.

The second configuration information may indicate the type of the data to be reported. In this configuration, the terminal apparatus 10 selects the type of the data to be reported on the basis of the second configuration information. Regarding the selected data, the terminal apparatus 10 may transmit the delay information report.

The second configuration information may be explicit information indicating the type of the data to be reported or implicit information indicating the type of the data to be reported. An example of the explicit information and an example of the implicit information are described below.

- Explicit Information

The second configuration information may be information indicating any one of LCH, LCG, PDU, PDU set, and data burst.

- Implicit Information

The second configuration information may be the first configuration information. In this configuration, the terminal apparatus 10 may select the type of the data to be reported in accordance with an IE configured with the first configuration information.

In a case where the first configuration information is configured for a MAC cell group, this may indicate that the unit of data to be reported is data corresponding to one LCG. For example, the first configuration information may be configured for an IE related to the MAC cell group included in the RRC message. Examples of such an IE includes the IE "BSR-config". As another example, in a case where the first configuration information is configured for an LCG, this may indicate that the unit of data to be reported is data corresponding to one LCG. For example, the first configuration information may be configured for an IE related to an LCG. Examples of such an IE includes the IE "logicalChannelGroup".

In a case where the first configuration information is configured for a PDU or PDU set, this may indicate that the unit of data to be reported is data corresponding to a PDU or one or more PDU sets. For example, the first configuration information may be configured for an IE related to the PDU or PDU set included in the RRC message.

In a case where the first configuration information is configured for a data burst, this may indicate that the unit of data to be reported is data corresponding to one or more data bursts. For example, the first configuration information may be configured for an IE related to the data burst included in the RRC message.

For example, in a case where the RRC message includes information indicating the first threshold Th1, the terminal apparatus 10 may perform control to trigger (and/or transmit) the delay information report. In other words, in the case where the RRC message includes the information indicating the first threshold Th1, the terminal apparatus 10 may include, in a BSR, the delay information report, on the basis of the first threshold Th1. In a case where the RRC message does not include the information indicating the first threshold Th1, the terminal apparatus 10 may perform control not to trigger (and/or not to transmit) the delay information report. In other words, in the case where the RRC message does not include the information indicating the first threshold Th1, the terminal apparatus 10 may include no delay information report in a BSR.

A MAC PDU may include identification information for identification of whether the delay information report is provided. For example, a MAC subheader includes a value (i.e., codepoint) of LCID or eLCID. A value of LCID or eLCID for indication of the delay information report may be defined. Based on the type of the data to be reported, the following value of LCID or eLCID may be defined.

- The MAC CE includes the delay information report and the unit of data to be reported is data corresponding to one LCH.
- The MAC CE includes the delay information report and the unit of data to be reported is data corresponding to one LCG.
- The MAC CE includes the delay information report and the unit of data to be reported is data corresponding to one PDU.
- The MAC CE includes the delay information report and the unit of data to be reported is data corresponding to one or more PDU sets.
- The MAC CE includes the delay information report and the unit of data to be reported is data corresponding to one or more data bursts.

In a case where a BSR includes the delay information report, based on the type of the data to be reported, the following value of LCID or eLCID may be defined.

- The BSR includes the delay information report and the unit of data to be reported is data corresponding to one LCH.
- The BSR includes the delay information report and the unit of data to be reported is data corresponding to one LCG.
- The BSR includes the delay information report and the unit of data to be reported is data corresponding to one PDU.
- The BSR includes the delay information report and the unit of data to be reported is data corresponding to one or more PDU sets.
- The BSR includes the delay information report and the unit of data to be reported is data corresponding to one or more data bursts.

Furthermore, a value of LCID or eLCID may be defined indicating that the BSR includes the delay information report and that which one of the following formats the BSR is in.

- Short BSR
- Long BSR
- Short Truncated BSR
- Long Truncated BSR
- Extended Short Truncated BSR
- Extended Long Truncated BSR
- Pre-emptive BSR
- Extended Pre-emptive BSR

In another example, the MAC CE including the delay information report may include the identification information. For example, the BSR may further include a field including the identification information indicating that the delay information is included.

1.6.3. Condition to Trigger Delay Information Report

The terminal apparatus 10 may trigger the delay information report in accordance with a certain condition. Hereinafter, the condition is referred to as "trigger condition". The trigger condition may include at least one of the conditions (a1) to (a4).

Furthermore, the trigger condition may include at least one of the following conditions (d1) to (d4).

(d1) There is data of which the remaining time is equal to or shorter than the first threshold Th1.
(d2) On-duration of discontinuous reception (DRX) is initiated.
(d3) There is a PDU set or data burst to be transmitted or the PDU set or data burst is buffered.
(d4) A PDU set is discarded.

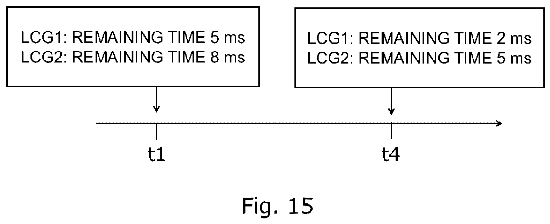

For example, it is assumed that the terminal apparatus 10 triggers the delay information report in accordance with the condition (d1). Here, the unit of data to be reported is data corresponding to an LCG. In addition, the first threshold Th1 is 5 ms. As illustrated in Fig. 15, at a time t1, data corresponding to LCG 1 satisfies the condition (d1). The terminal apparatus 10 triggers the delay information report. The delay information report includes, for each LCG, information related to the remaining time as the delay information. The base station apparatus 20 receives the delay information report and recognizes that the data corresponding to LCG 1 has the remaining time of 5 ms and data corresponding to LCG 2 has the remaining time of 8 ms. At a time t4, 3 ms after the time t1, the data corresponding to LCG 1 and the data corresponding to LCG 2 each satisfy the condition (d1). Thus, the terminal apparatus 10 triggers the delay information report again. Each remaining time included in the delay information report, however, has only 3 ms passed. Thus, the delay information report is highly possible to be known information for the base station apparatus 20. In the example of Fig. 15, the delay information report is unnecessarily triggered, and thus increase in communication load (i.e., overhead) may be caused. Note that such an issue may occur even in a condition other than the condition (d1), for example, any of the conditions (a1) to (a4) and (d2) to (d4). It is desired to prevent an unnecessary delay information report from being frequently triggered.

Taking this into account, the terminal apparatus 10 determines whether to trigger (or whether to transmit) the delay information report by using a certain condition that restricts transmission of the delay information report. Hereinafter, the condition is referred to as "restriction condition". The restriction condition may include at least one of the following condition (e1) or (e2).

(e1) A first timer is running.
(e2) The delay information report regarding certain data triggered at a current time point has already been transmitted.

In a case where the restriction condition is satisfied with the trigger condition being satisfied, the terminal apparatus 10 does not trigger or transmit the delay information report. In a case where the restriction condition is not satisfied with the trigger condition being satisfied, the terminal apparatus 10 triggers or transmits the delay information report. Hereinafter, details are described on Aspect 1-1 using the condition (e1) and Aspect 1-2 using the condition (e2).

- Aspect 1-1

The first timer is a timer for configuration of a period of time during when the delay information report is not triggered or transmitted. In other words, the first timer is a prohibition timer for prohibition against triggering or transmission of the delay information report. The first timer expires in a certain period of time. The period of time for the first timer may be selected from among a plurality of values. While the first timer is running, the terminal apparatus 10 does not trigger or transmit the delay information report. In a case where the first timer is not running, the terminal apparatus 10 triggers or transmits the delay information report. For example, in a case where an RRC message includes information indicating the first timer, the terminal apparatus 10 may perform control to trigger (and/or transmit) the delay information report. In other words, in the case where the RRC message includes the information indicating the first timer and the first timer is running, the terminal apparatus 10 may trigger or transmit no delay information report. In a case where the RRC message includes the information indicating the first timer and the first timer is not running, the terminal apparatus 10 may trigger or transmit the delay information report. In a case where the RRC message does not include the information indicating the first timer, the terminal apparatus 10 may perform control not to trigger or transmit the delay information report.

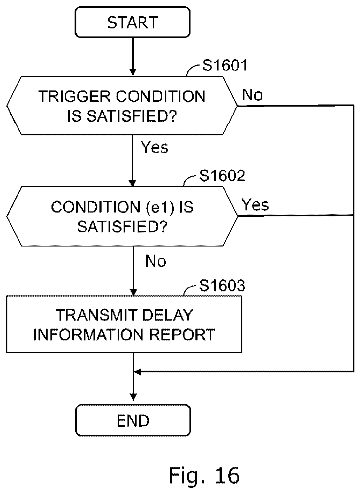

Having a flow illustrated in Fig. 16 started, the controller 110 determines whether the trigger condition is satisfied (S1601). The trigger condition may include at least one of the conditions (a1) to (a4) and (d1) to (d4). In a case where the trigger condition is not satisfied, the communicator 120 does not transmit the delay information report.

In contrast, in a case where the trigger condition is satisfied, the controller 110 determines whether the condition (e1) is satisfied (S1602). In a case where the condition (e1) is satisfied, the communicator 120 does not transmit the delay information report. In contrast, in a case where the condition (e1) is not satisfied, the communicator 120 transmits the delay information report (S1603).

Based on the delay information report, the controller 210 of the base station apparatus 20 performs radio resource allocation with respect to the terminal apparatus 10. The controller 210 may allocate a radio resource to data having delay, with priority.

Note that the condition (e1) may be applied to a specific condition in the trigger condition. For example, the condition (e1) may be applied to the condition (d1). For example, in a case where the condition (d1) is satisfied and the condition (e1) is satisfied, the communicator 120 does not transmit the delay information report. In a case where the condition (d1) is satisfied and the condition (e1) is not satisfied, the communicator 120 transmits the delay information report. In a case where at least one of the conditions (a1) to (a4) and (d2) to (d4) is satisfied, the communicator 120 may transmit the delay information report without performing determination of the condition (e1). In another example, in a case where the condition (d1) is satisfied, the terminal apparatus 10 may start or restart the first timer. In the case where at least one of the conditions (a1) to (a4) and (d2) to (d4) is satisfied, the terminal apparatus 10 may not start or restart the first timer. Regarding the condition (d1), as compared with the other conditions, frequent transmission of the delay information report is more likely to occur. Such a configuration described above can effectively prevent an unnecessary delay information report from being frequently triggered.

Note that only transmission of a BSR including the delay information report may be restricted by using the restriction condition. In other words, the condition (e1) may be applied to a BSR including the delay information report and the condition (e1) may not be applied to a BSR including no delay information report (i.e., the BSR illustrated in Fig. 9 or 10). Thus, even in a case where the condition (e1) is satisfied, the communicator 120 may transmit a BSR including no delay information report.

At a time point when the delay information report is triggered or transmitted, the first timer may be started or restarted. In a configuration that a BSR includes the delay information report, at a time point when the BSR is triggered or transmitted, the first timer may be started or restarted. In another example, at a time point when the BSR including the delay information report is triggered or transmitted, the first timer may be started or restarted. In other words, at a time point when a BSR including no delay information report is triggered or transmitted, the first timer may not be started or restarted.

In a configuration that a BSR includes the delay information report, the first timer may be used as a period of time during when no SR is triggered or transmitted. In other words, while the first timer is running, the terminal apparatus 10 trigger or transmit no SR.

The terminal apparatus 10 may store in advance, in the terminal apparatus 10 itself, information related to the first timer. The terminal apparatus 10 may receive, from the base station apparatus 20, the information related to the first timer. The base station apparatus 20 may select one value from among a plurality of values related to the first timer and transmit, to the terminal apparatus 10, the selected value. The base station apparatus 20 may transmit, to the terminal apparatus 10, an RRC message including the information related to the first timer. The base station apparatus 20 may transmit, to the terminal apparatus 10, system information (SI, for example, SIB1 and/or SIB other than SIB1) including the information related to the first timer. The base station apparatus 20 may transmit, to the terminal apparatus 10, DCI including the information related to the first timer.

The information related to the first timer may be included in parameters related to a BSR. For example, the information related to the first timer may be included in the IE "BSR-config".

The first timer may be configured for an LCH or LCG. The information related to the first timer may be configured for an IE related to the LCH or LCG. Examples of such an IE includes the IE "LogicalChannelConfig" and the IE "logicalChannelGroup". In this configuration, in a case where the delay information report regarding an LCH or LCG configured with the first timer is triggered or transmitted, the first timer is started or restarted. Thus, while the first timer is running, the delay information report regarding the LCH or LCG configured with the first timer is not triggered or transmitted.

The first timer may be configured for a PDU or PDU set. The information related to the first timer may be configured for an IE related to the PDU or PDU set. For example, the information related to the first timer may be configured for an IE related to the PDU or PDU set included in the RRC message. In this configuration, in a case where the delay information report regarding a PDU or PDU set configured with the first timer is triggered or transmitted, the first timer is started or restarted. Thus, while the first timer is running, the delay information report regarding the PDU or PDU set configured with the first timer is not triggered or transmitted.

The first timer may be configured for a data burst. The information related to the first timer may be configured for an IE related to the data burst. For example, the information related to the first timer may be configured for an IE related to the data burst included in the RRC message. In this configuration, in a case where the delay information report regarding a data burst configured with the first timer is triggered or transmitted, the first timer is started or restarted. Thus, while the first timer is running, the delay information report regarding the data burst configured with the first timer is not triggered or transmitted.

The terminal apparatus 10 may receive, from the base station apparatus 20, third configuration information related to the delay information report. The base station apparatus 20 may transmit, to the terminal apparatus 10, an RRC message including the third configuration information. The base station apparatus 20 may transmit, to the terminal apparatus 10, system information (SI, for example, SIB1 and/or SIB other than SIB1) including the third configuration information. The base station apparatus 20 may transmit, to the terminal apparatus 10, DCI including the third configuration information.

The third configuration information may be "information indicating whether to apply the first timer". The third configuration information may indicate "application of the first timer" or "no application of the first timer". The third configuration information may be a flag indicating "application of the first timer" or "no application of the first timer". The third configuration information may be configured for an LCH. For example, the third configuration information may be configured as a new element of the IE "LogicalChannelConfig". The third configuration information may be configured for an LCG. For example, the third configuration information may be configured as a new element of the IE "logicalChannelGroup". The third configuration information may be configured for a PDU or PDU set. The third configuration information may be configured for an IE related to the PDU or PDU set included in the RRC message. The third configuration information may be configured for a data burst. The third configuration information may be configured for an IE related to the data burst included in the RRC message.

In a case where the third configuration information indicating no application of the first timer is configured for an LCH or LCG and the delay information report regarding the LCH or LCG is triggered, the terminal apparatus 10 may stop the first timer. In a case where the third configuration information indicating no application of the first timer is configured for a PDU or PDU set and the delay information report regarding the PDU or PDU set is triggered, the terminal apparatus 10 may stop the first timer. In a case where the third configuration information indicating no application of the first timer is configured for a data burst and the delay information report regarding the data burst is triggered, the terminal apparatus 10 may stop the first timer.

- Aspect 1-2

Satisfaction of the condition (e2) means that the delay information report regarding certain data triggered at a current time point has been transmitted in the past. Satisfaction of the condition (e2) may mean that the delay information report regarding certain data triggered at a current time point is included in a previously-transmitted delay information report. In a case where the condition (e2) is not satisfied, this means that the delay information report regarding certain data triggered at a current time point is not yet transmitted, in other words, the delay information report regarding new data is triggered.

In the example of Fig. 15, the delay information report related to the data corresponding to LCG 1 and the data corresponding to LCG 2 is triggered at the time t4. However, the delay information report related to these pieces of data has already been transmitted at the time t1. The condition (e2) is satisfied in such a case, and thus the terminal apparatus 10 does not transmit the delay information report at the time t4. Thereafter, for example, in a case where the delay information report regarding new data (for example, data corresponding to LCG 3) is triggered, the condition (e2) is not satisfied. Thus, the terminal apparatus 10 transmits the delay information report regarding the data corresponding to LCG 3.

Note that, in a case where the condition (e2) is not satisfied, the delay information report to be transmitted may include the delay information report already transmitted and the delay information report regarding new data. In the case where the condition (e2) is not satisfied, the delay information report to be transmitted may only include the delay information report regarding new data.

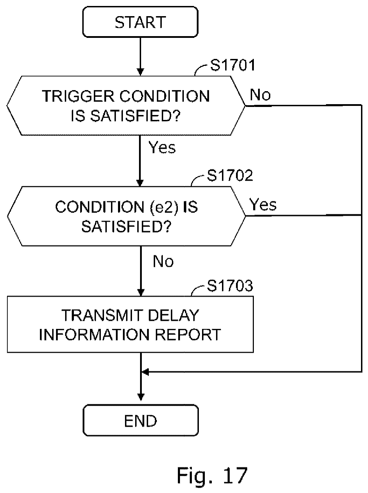

Having a flow illustrated in Fig. 17 started, the controller 110 determines whether the trigger condition is satisfied (S1701). The trigger condition may include at least one of the conditions (a1) to (a4) and (d1) to (d4). In a case where the trigger condition is not satisfied, the communicator 120 does not transmit the delay information report.

In contrast, in a case where the trigger condition is satisfied, the controller 110 determines whether the condition (e2) is satisfied (S1702). In a case where the condition (e2) is satisfied, the communicator 120 does not transmit the delay information report. In contrast, in a case where the condition (e2) is not satisfied, the communicator 120 transmits the delay information report (S1703).

Note that the condition (e2) may be applied to a specific condition in the trigger condition. For example, the condition (e2) may be applied to the condition (d1). For example, in a case where the condition (d1) is satisfied and the condition (e2) is satisfied, the communicator 120 does not transmit the delay information report. In a case where the condition (d1) is satisfied and the condition (e2) is not satisfied, the communicator 120 transmits the delay information report. In a case where at least one of the conditions (a1) to (a4) and (d2) to (d4) is satisfied, the communicator 120 may transmit the delay information report without performing determination of the condition (e2). Regarding the condition (d1), as compared with the other conditions, frequent transmission of the delay information report is more likely to occur. Such a configuration described above can effectively prevent an unnecessary delay information report from being frequently triggered.

In a case where the unit of data to be reported is data corresponding to one or more PDU sets, the terminal apparatus 10 may operate as below. It is assumed that the trigger condition (for example, condition (d1)) is satisfied for a certain PDU and the delay information report regarding a PDU set that the PDU belongs to is transmitted. Thereafter, even if the trigger condition is satisfied for another PDU included in the PDU set that the PDU belongs to, the terminal apparatus 10 does not trigger or transmit the delay information report regarding the PDU set.

Such a configuration described above can prevent an unnecessary delay information report from being frequently triggered, by applying at least one of the condition (e1) or (e2). Thus, a possibility of increase in communication load can be reduced.

Note that Aspect 1-1 and Aspect 1-2 may be combined. In other words, the terminal apparatus 10 may trigger or transmit the delay information report by using the conditions (e1) and (e2). For example, in a case where neither the condition (e1) nor (e2) is satisfied with the trigger condition being satisfied, the communicator 120 may transmit the delay information report.

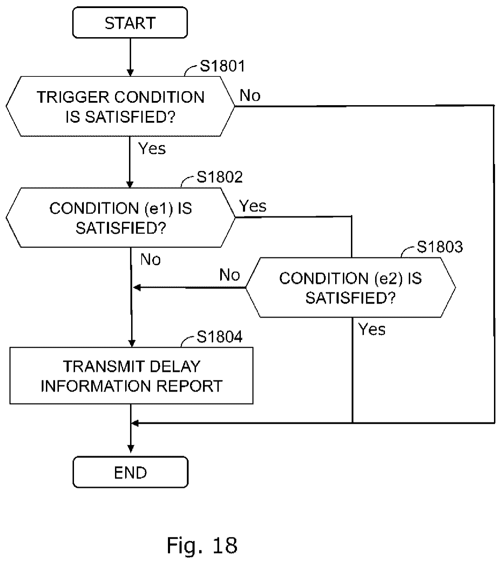

In another example, either the condition (e1) or (e2) may be prioritized. For example, having a flow illustrated in Fig. 18 started, the controller 110 determines whether the trigger condition is satisfied (S1801). The trigger condition may include at least one of the conditions (a1) to (a4) and (d1) to (d4). In a case where the trigger condition is not satisfied, the communicator 120 does not transmit the delay information report.

In contrast, in a case where the trigger condition is satisfied, the controller 110 determines whether the condition (e1) is satisfied (S1802). In a case where the condition (e1) is satisfied, the controller 110 determines whether the condition (e2) is satisfied (S1803). In a case where the condition (e2) is satisfied, the communicator 120 does not transmit the delay information report.

In contrast, in a case where the condition (e1) is not satisfied in Step S1802, the communicator 120 transmits the delay information report (S1804). In a case where the condition (e2) is not satisfied in Step S1803, the communicator 120 transmits the delay information report (S1804).

As described above, in a case where the condition (e1) is satisfied and the condition (e2) is not satisfied, the communicator 120 may transmit the delay information report. In other words, even if the first timer is running, in a case where the delay information report regarding new data is triggered, the communicator 120 may transmit the delay information report.

2. Second Embodiment

Next, a configuration of a second embodiment will be described. Hereinafter, only details different from that of the first embodiment are described, and description on details the same as that of the first embodiment is omitted. Thus, the configuration of the first embodiment and any alteration thereof may be applied to the configuration described in the present embodiment as long as the configurations are not inconsistent with each other.

The delay information report includes the delay information of uplink data with a requirement of low latency. Therefore, delay in transmission of the delay information report may cause the delay information report to be unnecessary information for the base station apparatus 20. For example, in the example of Fig. 15, it is assumed that the delay information report to be transmitted at the time t1 has a delay of 5 ms or more. In this case, information related to the remaining time corresponding to LCG 1 may be unnecessary information for the base station apparatus 20. In addition, transmission of such unnecessary delay information report may cause increase in communication load (i.e., overhead).

Taking this into account, in a situation where the delay information report is triggered in accordance with the trigger condition, the terminal apparatus 10 determines whether available uplink resources can accommodate the delay information report. Based on the determination, the terminal apparatus 10 performs certain processing related to transmission of the delay information report. The certain processing includes, for example, at least one of transmission of a scheduling request (SR) or cancellation of transmission of the delay information report. Hereinafter, Aspect 2-1 and Aspect 2-2 are described.

- Aspect 2-1

The terminal apparatus 10 determines, in a situation where the delay information report is triggered, whether the following condition (f1) is satisfied.
(f1) Uplink resources can accommodate the delay information report. In other words, the uplink resources are available for a new transmission of the delay information report and the uplink resources can accommodate the delay information report.

In a case where the condition (f1) is satisfied, the terminal apparatus 10 transmits the delay information report. In contrast, in a case where the condition (f1) is not satisfied, in other words, a case where the uplink resources are determined not to be able to accommodate the delay information report, the terminal apparatus 10 performs processing for transmission of an SR as the certain processing. The processing for transmission of the SR may include one or more pieces of processing related to the SR. The processing for transmission of the SR may include transmission of the SR. Thus, based on that the uplink resources are not able to accommodate the delay information report in a situation where the delay information report is triggered, the terminal apparatus 10 may perform the processing for transmission of the SR. In accordance with the SR, the base station apparatus 20 allocates uplink resources to the terminal apparatus 10. The terminal apparatus 10 can transmit the delay information report by using the allocated uplink resources.

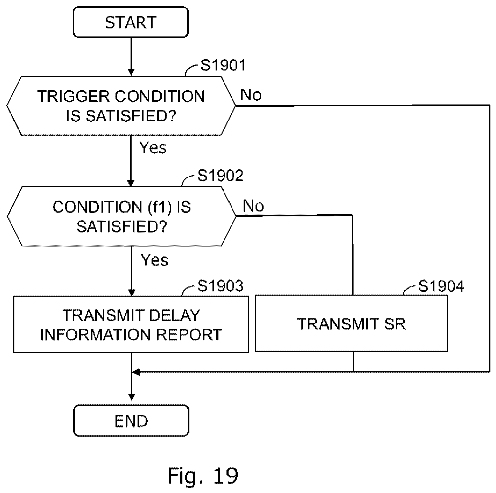

Having a flow illustrated in Fig. 19 started, the controller 110 determines whether the trigger condition is satisfied (S1901). The trigger condition may include at least one of the conditions (a1) to (a4) and (d1) to (d4). In a case where the trigger condition is not satisfied, the communicator 120 does not transmit the delay information report.

In contrast, in a case where the trigger condition is satisfied, the controller 110 determines whether the condition (f1) is satisfied (S1902). In a case where the condition (f1) is satisfied, the communicator 120 transmits the delay information report (S1903). In contrast, in a case where the condition (f1) is not satisfied, this means there is no uplink resource available for the delay information report. Therefore, the communicator 120 transmits an SR to the base station apparatus 20 (S1904).

Note that, in the case where the condition (f1) is not satisfied, the controller 110 may determine whether a second timer to delay transmission of the SR is running. For example, the second timer may be "logicalChannelSR-DelayTimer". In a case where the second timer is running, the communicator 120 may transmit no SR. In a case where the second timer is not running, the communicator 120 may transmit an SR.

In another example, even in a case where the second timer is running, the communicator 120 may transmit an SR. In other words, irrespective of whether the second timer is running, the communicator 120 may transmit an SR. The delay information report includes the delay information of uplink data with the requirement of low latency, and thus is preferable to be transmitted to the base station apparatus 20 as quickly as possible. Such a configuration allows uplink resources for transmission of the delay information report to be allocated to the terminal apparatus 10 more quickly.

Note that the condition (f1) may be applied to a specific condition in the trigger condition. For example, the condition (f1) may be applied to the condition (d1). For example, in a case where the condition (d1) is satisfied and the condition (f1) is not satisfied, the communicator 120 transmits an SR. In a case where the delay information report is triggered in accordance with the condition (d1), this means that the remaining time until completion of transmission of the delay information report is short. Application of the condition (f1) to the condition (d1) allows uplink resources for transmission of the delay information report to be allocated to the terminal apparatus 10 more quickly.

In a case where the condition (f1) is satisfied and a subject to be triggered (i.e., data corresponding to an LCH, LCG, PDU, PDU set, or data burst) does not meet the LCP mapping restriction, the communicator 120 may transmit no SR.

Such a configuration described above allows uplink resources to be allocated to the terminal apparatus 10 by transmitting an SR. For example, in a case where the delay information report is triggered in accordance with the condition (d1), the base station apparatus 20 can receive the delay information report before the first time limit for data corresponding to the delay information included in the delay information report has passed. The base station apparatus 20 can appropriately allocate uplink resources to the terminal apparatus 10.

- Aspect 2-2

The terminal apparatus 10 determines, in a situation where the delay information report is triggered, whether the following condition (g1) is satisfied.

(g1) Uplink resources can accommodate the delay information report by a certain second time limit. In other words, the uplink resources are available for a new transmission of the delay information report and the uplink resources can accommodate the delay information report by the second time limit.

The terminal apparatus 10 may determine, based on the remaining time, the second time limit for the condition (g1). In other words, the second time limit may be the same as the first time limit described above. More specifically, the second time limit may be a time limit until when transmission of a part or all of the data to be reported is to be completed. The second time limit may be a time limit determined based on a PDB or PSDB. The second time limit may be a time limit determined based on a PDB or PSDB configured for a part or all of the data to be reported. The second time limit may be a value obtained by adding a PDB or PSDB to the first time. The second time limit may be a value earlier than a value obtained by adding a PDB or PSDB to the first time.

In a case where the condition (g1) is satisfied, the terminal apparatus 10 transmits the delay information report. In contrast, in a case where the condition (g1) is not satisfied, the terminal apparatus 10 cancels transmission or triggering of the delay information report, as the certain processing. Specifically, based on that the uplink resources are not able to accommodate the delay information report by the second time limit in a situation where the delay information report is triggered, the transmission or triggering of the delay information report is cancelled. In other words, in the case where the condition (g1) is not satisfied, the terminal apparatus 10 cancels triggering (i.e., triggering based on satisfaction of the trigger condition) with respect to the delay information report.

The condition (g1) may be replaced with a condition that triggering with respect to the delay information report is not cancelled by the second time limit. Thus, the terminal apparatus 10 may cancel transmission or triggering of the delay information report, based on that the triggering with respect to the delay information report is not cancelled by the second time limit.

In a case where, until the second time limit has passed, there are no uplink resources that are available for a new transmission and able to accommodate the delay information report, the terminal apparatus 10 may cancel transmission or triggering of the delay information report. In another example, in a case where, even though the delay information report is triggered, the delay information report fails to be transmitted before a time limit of the delay information included in the delay information report expires, the terminal apparatus 10 may cancel transmission or triggering of the delay information report.

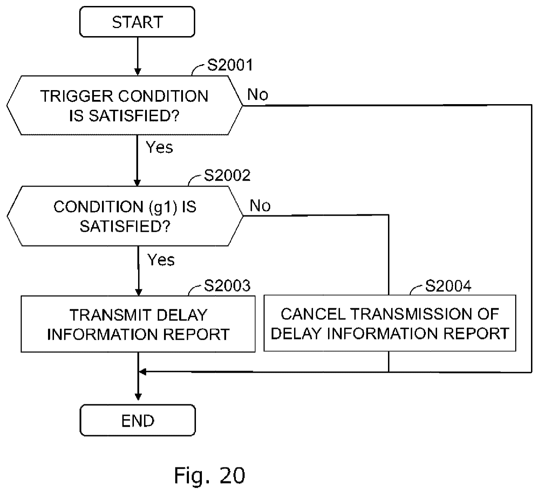

Having a flow illustrated in Fig. 20 started, the controller 110 determines whether the trigger condition is satisfied (S2001). The trigger condition may include at least one of the conditions (a1) to (a4) and (d1) to (d4). In a case where the trigger condition is not satisfied, the communicator 120 does not transmit the delay information report.

In contrast, in a case where the trigger condition is satisfied, the controller 110 determines whether the condition (g1) is satisfied (S2002). In a case where the condition (g1) is satisfied, the communicator 120 transmits the delay information report (S2003). In contrast, in a case where the condition (g1) is not satisfied, the communicator 120 cancels transmission or triggering of the delay information report (S2004). Note that the controller 110 may cancel the transmission or triggering of the delay information report and transmit, to the communicator 120, indication of the cancellation.

Note that, in a case where the condition (c1) or (c2) is satisfied, the communicator 120 may cancel transmission or triggering of the delay information report.

The condition (g1) may be applied to a specific condition in the trigger condition. For example, the condition (g1) may be applied to the condition (d1). For example, in a case where the condition (d1) is satisfied and the condition (g1) is not satisfied, the communicator 120 cancels transmission or triggering of the delay information report. In a case where the delay information report is triggered in accordance with the condition (d1), this means that the remaining time until completion of transmission of the delay information report is short. Even if the delay information report is transmitted to the base station apparatus 20 in such a case, data corresponding to the delay information included in the delay information report may have passed the first time limit. In other words, the delay information included in the delay information report may be unnecessary information, not useful information, for the base station apparatus 20. Transmission of such an unnecessary delay information report may cause increase in communication load. Such a configuration can prevent an unnecessary delay information report from being transmitted.

The terminal apparatus 10 may start a third timer at a time point when the delay information report is triggered (i.e., the trigger condition is satisfied), and then determine, based on the third timer, the second time limit. The third timer expires in a certain period of time. The period of time for the third timer may be selected from among a plurality of values. For example, at a time point when the third timer expires, the terminal apparatus 10 may determine that the condition (g1) is not satisfied. The terminal apparatus 10 may receive, from the base station apparatus 20, an RRC message including information related to the third timer.

In a configuration of a BSR including the delay information report, the information related to the third timer may be included in an IE related to the BSR (for example, the IE "BSR-Config").

The third timer may be configured for an LCH or LCG. The information related to the third timer may be configured for an IE related to the LCH or LCG. Examples of such an IE includes the IE "LogicalChannelConfig" and the IE "logicalChannelGroup". In this configuration, at a time point when the delay information report regarding an LCH or LCG configured with the third timer is triggered, the third timer is started. Thus, in a case where the third timer expires, transmission or triggering of the delay information report regarding the LCH or LCG configured with the third timer is cancelled. Note that the delay information report regarding an LCH or LCG not configured with the third timer may be transmitted. In other words, triggering of the delay information report regarding the LCH or LCG not configured with the third timer may not need to be cancelled.

The third timer may be configured for a PDU or PDU set. The information related to the third timer may be configured for an IE related to the PDU or PDU set. For example, the information related to the third timer may be configured for an IE related to the PDU or PDU set included in the RRC message. In this configuration, at a time point when the delay information report regarding a PDU or PDU set configured with the third timer is triggered, the third timer is started. Thus, in a case where the third timer expires, transmission or triggering of the delay information report regarding the PDU or PDU set configured with the third timer is cancelled. Note that the delay information report regarding a PDU or PDU set not configured with the third timer may be transmitted. In other words, triggering of the delay information report regarding the PDU or PDU set not configured with the third timer may not need to be cancelled.

The third timer may be configured for a data burst. The information related to the third timer may be configured for an IE related to the data burst. For example, the information related to the third timer may be configured for an IE related to the data burst included in the RRC message. In this configuration, at a time point when the delay information report regarding a data burst configured with the third timer is triggered, the third timer is started. Thus, in a case where the third timer expires, transmission or triggering of the delay information report regarding the data burst configured with the third timer is cancelled. Note that the delay information report regarding a data burst not configured with the third timer may be transmitted. In other words, triggering of the delay information report regarding the data burst not configured with the third timer may not need to be cancelled.

Such a configuration described above can prevent an unnecessary delay information report from being transmitted. No uplink resource is used for such an unnecessary delay information report, and thus a possibility of increase in communication load can be reduced.

Aspect 2-1 and Aspect 2-2 may be combined. In other words, by using the conditions (f1) and (g1), the terminal apparatus 10 may perform certain processing related to transmission of the delay information report. For example, after performing Step S1904 in the flow of Fig. 19, the controller 110 may determine whether the condition (g1) is satisfied. In a case where the condition (g1) is not satisfied, the communicator 120 may cancel transmission or triggering of the delay information report. As described above, in a case where, after transmission of an SR by the terminal apparatus 10, there is no uplink resource able to accommodate the delay information report by the second time limit, the terminal apparatus 10 may cancel transmission or triggering of the delay information report.

3. Alterations

Although the present disclosure is described according to the embodiments, it is understood that the present disclosure is not limited to the embodiments or the structures. The present disclosure includes various alterations and variations within the equivalent scope. Any other combination including one or more elements included in the embodiments is included in the gist or spirit scope of the present disclosure.

In Figs. 16 to 18, although determination of the trigger condition is followed by determination of the restriction condition (condition (e1) and/or (e2)), the present disclosure is not limited to this configuration. For example, determination of the restriction condition may be performed prior to determination of the trigger condition. Based on whether the restriction condition is satisfied, the terminal apparatus 10 may determine whether to determine the trigger condition. For example, in a case where the restriction condition is satisfied, the terminal apparatus 10 does not determine the trigger condition. In other words, the delay information report is not triggered. In a case where the restriction condition is not satisfied, the terminal apparatus 10 determines the trigger condition. Therefore, the first embodiment may include an "aspect that the terminal apparatus 10 cancels triggering with respect to the delay information report by using the restriction condition after the trigger condition is satisfied" and "aspect that the terminal apparatus 10 does not determine the trigger condition for the delay information report on the basis of that the restriction condition is satisfied".

In Fig. 19, although determination of the trigger condition is followed by determination of the condition (f1), the present disclosure is not limited to this configuration. For example, determination of the condition (f1) may be performed prior to determination of the trigger condition. Based on whether the condition (f1) is satisfied, the terminal apparatus 10 may determine whether to determine the trigger condition. In a case where the condition (f1) is satisfied, the terminal apparatus 10 determines the trigger condition. In a case where the condition (f1) is not satisfied, the terminal apparatus 10 performs processing for transmission of an SR. Therefore, Aspect 2-1 of the second embodiment may include an "aspect that the terminal apparatus 10 performs processing for transmission of an SR in a case where the trigger condition is satisfied and the condition (f1) is not satisfied" and "aspect that the terminal apparatus 10 performs processing for transmission of an SR, without determining the trigger condition, in a case where the condition (f1) is not satisfied".

In Fig. 20, although determination of the trigger condition is followed by determination of the condition (g1), the present disclosure is not limited to this configuration. For example, determination of the condition (g1) may be performed prior to determination of the trigger condition. Based on whether the condition (g1) is satisfied, the terminal apparatus 10 may determine whether to determine the trigger condition. In a case where the condition (g1) is satisfied, the terminal apparatus 10 determines the trigger condition. In a case where the condition (g1) is not satisfied, the terminal apparatus 10 does not determine the trigger condition. In other words, the delay information report is not triggered. Therefore, Aspect 2-2 of the second embodiment may include an "aspect that the terminal apparatus 10 cancels triggering with respect to the delay information report (i.e., triggering in accordance with satisfaction of the trigger condition) in a case where the condition (g1) is not satisfied" and "aspect that the terminal apparatus 10 does not determine the trigger condition for the delay information report in a case where the condition (g1) is not satisfied".

Expressions such as words and phrases used in the embodiments are merely examples, and may be replaced with substantially the same or similar expressions. Particularly, since the technique according to the embodiments relates to technical specifications, the expressions in the embodiments may be replaced with substantially the same or similar expressions in the technical specifications (for example, the technical specifications cited in the Specification of the present application).

The information transmitted/received in the embodiments may be transmitted/received in the same or a different message or the same or a different element as or from that already described in the technical specifications, or may be transmitted/received in a new message or element to be defined. The information transmitted/received in the embodiments may be transmitted/received using a different layer and/or a different channel from that of the embodiments.

The means and/or the functions provided by the apparatuses described in the embodiments can be provided by software stored in a tangible memory apparatus and a computer that executes the software, the software only, hardware only, or a combination of those. For example, when one of the apparatuses is provided by an electronic circuit being hardware, it can be provided by a digital circuit including a number of logic circuits or an analog circuit.

The apparatuses described in the embodiments execute a program stored in a non-transitory tangible storage medium. Execution of the program causes execution of a method corresponding to the program.

4. Supplementary Notes

The whole or part of the embodiments and the alterations may be described as the following supplementary notes, but the disclosure is not limited to the contents of the following supplementary notes. The following expresses relationships in which a supplementary note that depends upon a plurality of supplementary notes depends upon a supplementary note that depends upon a plurality of supplementary notes. All of the dependency relationships of the supplementary notes expressed below are included in the embodiments.

(Supplementary Note 1)

A terminal apparatus (10) including:

a controller (110) configured to perform, in a situation in which a delay information report including delay information related to delay for certain data is triggered, determination of whether an available uplink resource is able to accommodate the delay information report; and
a communicator (120) configured to execute, based on the determination, certain processing related to transmission of the delay information report.

(Supplementary Note 2)

The terminal apparatus according to supplementary note 1, wherein
the communicator is configured to execute, based on that the available uplink resource is not able to accommodate the delay information report in the situation in which the delay information report is triggered, processing for transmission of a scheduling request (SR) as the certain processing.

(Supplementary Note 3)

The terminal apparatus according to supplementary note 2, wherein

the communicator is configured not to execute the processing for transmission of the SR in a case where the available uplink resource is not able to accommodate the delay information report in the situation in which the delay information report is triggered and where a timer to delay transmission of the SR is running, and
the communicator is configured to execute the processing for transmission of the SR in a case where the available uplink resource is not able to accommodate the delay information report in the situation in which the delay information report is triggered and where the timer is not running.

(Supplementary Note 4)

The terminal apparatus according to supplementary note 3, wherein

the communicator is configured to receive, from a base station apparatus (20), a radio resource control (RRC) message, and
the timer is "logicalChennelSR-DelayTimer" included in the RRC message.

(Supplementary Note 5)

The terminal apparatus according to supplementary note 2, wherein
the communicator is configured to execute the processing for transmission of the SR even in a case where the available uplink resource is not able to accommodate the delay information report in the situation in which the delay information report is triggered and where a timer to delay transmission of the SR is running.

(Supplementary Note 6)

The terminal apparatus according to supplementary note 5, wherein

the communicator is configured to receive, from a base station apparatus (20), a radio resource control (RRC) message, and
the timer is "logicalChennelSR-DelayTimer" included in the RRC message.

(Supplementary Note 7)

The terminal apparatus according to supplementary note 2, wherein

the controller is configured to trigger the delay information report by using a trigger condition related to a remaining time until a transmission time limit for the certain data is reached, and
the communicator is configured to execute the processing for transmission of the SR in a case where the remaining time is a certain threshold or shorter and the available uplink resource is not able to accommodate the delay information report.

(Supplementary Note 8)

The terminal apparatus according to supplementary note 1, wherein
the communicator is configured to cancel, based on that the available uplink resource is not able to accommodate the delay information report by a certain time limit in the situation in which the delay information report is triggered, transmission or triggering of the delay information report as the certain processing.

(Supplementary Note 9)

The terminal apparatus according to supplementary note 8, wherein

the controller is configured to trigger the delay information report by using a trigger condition related to a remaining time until a transmission time limit for the certain data is reached, and
the communicator is configured to cancel, in a case where the remaining time is a certain threshold or shorter and the available uplink resource is not able to accommodate the delay information report by the certain time limit, transmission or triggering of the delay information report.

(Supplementary Note 10)

The terminal apparatus according to supplementary note 9, wherein
the controller is configured to determine the certain time limit on a basis of the remaining time.

(Supplementary Note 11)

The terminal apparatus according to supplementary note 8, wherein
the controller is configured to determine the certain time limit on a basis of a packet delay budget (PDB) or a protocol data unit-set delay budget (PSDB).

(Supplementary Note 12)

The terminal apparatus according to supplementary note 8, wherein
the controller is configured to
start a timer at a time point when the delay information report is triggered, and determine the certain time limit on a basis of the timer.

(Supplementary Note 13)

The terminal apparatus according to supplementary note 12, wherein

the communicator is configured to receive, from a base station apparatus (20), a radio resource control (RRC) message, and
the timer is included in the RRC message.

(Supplementary Note 14)

The terminal apparatus according to any one of supplementary notes 1 to 13, wherein
the delay information report is a buffer status report (Buffer Status Reporting (BSR)) including the delay information and buffer size information related to a buffer size.

(Supplementary Note 15)

The terminal apparatus according to any one of supplementary notes 1 to 14, wherein
the delay information is

information related to a delay time, or
information related to data provided with a temporal restriction or requirement.

(Supplementary Note 16)

The terminal apparatus according to any one of supplementary notes 1 to 15, wherein
the certain data is

data corresponding to one logical channel,
data corresponding to one logical channel group (LCG),
data corresponding to one or more protocol data unit sets (PDU sets), or
data corresponding to one or more data bursts.

(Supplementary Note 17)

A method of a terminal apparatus (10), the method including:

performing, in a situation in which a delay information report including delay information related to delay for certain data is triggered, determination of whether an available uplink resource is able to accommodate the delay information report; and
executing, based on the determination, certain processing related to transmission of the delay information report.

(Supplementary Note 18)

A program causing a processor (101) in a terminal apparatus (10) to execute:

performing, in a situation in which a delay information report including delay information related to delay for certain data is triggered, determination of whether an available uplink resource is able to accommodate the delay information report; and executing, based on the determination, certain processing related to transmission of the delay information report.

(Supplementary Note 19)

A non-transitory tangible storage medium storing thereon a program causing a processor (101) in a terminal apparatus (10) to execute:

performing, in a situation in which a delay information report including delay information related to delay for certain data is triggered, determination of whether an available uplink resource is able to accommodate the delay information report; and executing, based on the determination, certain processing related to transmission of the delay information report.

(Supplementary Note 20)

A base station apparatus (20) including:

a communicator (220) configured to receive, from a terminal apparatus (10), a delay information report including delay information related to delay for certain data; and a controller (210) configured to perform, based on the delay information report, radio resource allocation with respect to the terminal apparatus, wherein the communicator is configured to receive, from the terminal apparatus, a scheduling request (SR) in a case where, in the terminal apparatus, an available uplink resource is not able to accommodate the delay information report in a situation in which the delay information report is triggered in the terminal apparatus.

(Supplementary Note 21)

The base station apparatus according to supplementary note 20, wherein
the controller is configured to allocate a radio resource to the terminal apparatus, in accordance with the SR.

(Supplementary Note 22)

A method of a base station apparatus (20), the method including:

receiving, from a terminal apparatus (10), a delay information report including delay information related to delay for certain data;

performing, based on the delay information report, radio resource allocation with respect to the terminal apparatus; and receiving, from the terminal apparatus, a scheduling request (SR) in a case where, in the terminal apparatus, an available uplink resource is not able to accommodate the delay information report in a situation in which the delay information report is triggered in the terminal apparatus.

(Supplementary Note 23)

A program causing a processor (201) in a base station apparatus (20) to execute:

receiving, from a terminal apparatus (10), a delay information report including delay information related to delay for certain data; performing, based on the delay information report, radio resource allocation with respect to the terminal apparatus; and receiving, from the terminal apparatus, a scheduling request (SR) in a case where, in the terminal apparatus, an available uplink resource is not able to accommodate the delay information report in a situation in which the delay information report is triggered in the terminal apparatus.

(Supplementary Note 24)

A non-transitory tangible storage medium storing thereon a program causing a processor (201) in a base station apparatus (20) to execute:

receiving, from a terminal apparatus (10), a delay information report including delay information related to delay for certain data; performing, based on the delay information report, radio resource allocation with respect to the terminal apparatus; and receiving, from the terminal apparatus, a scheduling request (SR) in a case where, in the terminal apparatus, an available uplink resource is not able to accommodate the delay information report in a situation in which the delay information report is triggered in the terminal apparatus.

(Supplementary Note 25)

A terminal apparatus (10) including:

a receiver (122) configured to receive, from a base station apparatus (20), a radio resource control (RRC) message including information for configuring an identifier (ID) of a logical channel group (LCG) to which a logical channel (LCH) belongs, and information for indicating a threshold for control of triggering of a delay status report (DSR) for data of the LCG; and

a controller (110) configured to control the triggering of the DSR on the basis of that remaining time with respect to an earliest time limit for the data of the LCG becomes below the threshold and the DSR for the data of the LCG is not transmitted, wherein

the controller is configured to cancel, in a case where a time limit for the data of the LCG associated with the DSR expires, the DSR that has been triggered and has not been cancelled.

(Supplementary Note 26)

The terminal apparatus according to supplementary note 25, wherein
the DSR includes

a field with bits each indicating whether a buffer size field for each LCG is present,
a field indicating the remaining time with respect to the earliest time limit for the data of the LCG, and
a field indicating a buffer size related to the LCG.

(Supplementary Note 27)

The terminal apparatus according to supplementary note 26, wherein
the controller is configured to switch a table between a first table and a second table different from the first table to set the field indicating the buffer size.

(Supplementary Note 28)

The terminal apparatus according to supplementary note 25, wherein
the DSR includes

a field with bits each indicating whether a buffer size field for each LCG is present, and
a field including information related to the data of the LCG with the remaining time being below the threshold.

(Supplementary Note 29)

The terminal apparatus according to any one of supplementary notes 25 to 28, wherein
the DSR is a medium access control control element (MAC CE) including a subheader including an extended logical channel identifier (eLCID) for identification of the DSR.

(Supplementary Note 30)

A method of a terminal apparatus (10), the method including:

receiving, from a base station apparatus (20), a radio resource control (RRC) message including information for configuring an identifier (ID) of a logical channel group (LCG) to where a logical channel (LCH) belongs, and information for indicating a threshold for control of triggering of a delay status report (DSR) for data of the LCG;

controlling the triggering of the DSR on the basis of that remaining time with respect to an earliest time limit for the data of the LCG becomes below the threshold and the DSR for the data of the LCG is not transmitted; and

cancelling, in a case where a time limit of the data of the LCG associated with the DSR expires, the DSR that has been triggered and has not been cancelled.

(Supplementary Note 31)

The method of the terminal apparatus according to supplementary note 30, wherein
the DSR includes

a field with bits each indicating whether a buffer size field for each LCG is present,
a field indicating the remaining time with respect to the earliest time limit for the data of the LCG, and
a field indicating a buffer size related to the LCG.

(Supplementary Note 32)

The method of the terminal apparatus according to supplementary note 31, further comprising:
switching a table between a first table and a second table different from the first table to set the field indicating the buffer size.

(Supplementary Note 33)

The method of the terminal apparatus according to supplementary note 30, wherein
the DSR includes

a field with bits each indicating whether a buffer size field for each LCG is present, and
a field including information related to the data of the LCG with the remaining time being below the threshold.

(Supplementary Note 34)

The method of the terminal apparatus according to any one of supplementary notes 30 to 33, wherein
the DSR is a medium access control control element (MAC CE) including a subheader including an extended logical channel identifier (eLCID) for identification of the DSR.

(Supplementary Note 35)

A program causing a processor (101) in a terminal apparatus (10) to execute:

receiving, from a base station apparatus (20), a radio resource control (RRC) message including information for configuring an identifier (ID) of a logical channel group (LCG) to which a logical channel (LCH) belongs, and information for indicating a threshold for control of triggering of a delay status report (DSR) for data of the LCG;
controlling the triggering of the DSR on the basis of that remaining time with respect to an earliest time limit for the data of the LCG becomes below the threshold and the DSR for the data of the LCG is not transmitted; and
cancelling, in a case where a time limit for the data of the LCG associated with the DSR expires, the DSR that has been triggered and has not been cancelled.

(Supplementary Note 36)

A non-transitory tangible storage medium storing thereon a program causing a processor (101) in a terminal apparatus (10) to execute:

receiving, from a base station apparatus (20), a radio resource control (RRC) message including information for configuring an identifier (ID) of a logical channel group (LCG) to which a logical channel (LCH) belongs, and information for indicating a threshold for control of triggering of a delay status report (DSR) for data of the LCG;
controlling the triggering of the DSR on the basis of that remaining time with respect to an earliest time limit for the data of the LCG becomes below the threshold and the DSR for the data of the LCG is not transmitted; and
cancelling, in a case where a time limit for the data of the LCG associated with the DSR expires, the DSR that has been triggered and has not been cancelled.

Note that the disclosure contents of the above-mentioned related art documents and reference literature are incorporated herein by reference.

**Claims**

1. A terminal apparatus (10) comprising:

a receiver (122) configured to receive, from a base station apparatus (20), a radio resource control (RRC) message including information for configuring an identifier (ID) of a logical channel group (LCG) to which a logical channel (LCH) belongs, and information for indicating a threshold for control of triggering of a delay status report (DSR) for data of the LCG; and
a controller (110) configured to control the triggering of the DSR on the basis of that remaining time with respect to an earliest time limit for the data of the LCG becomes below the threshold and the DSR for the data of the LCG is not transmitted, wherein
the controller is configured to cancel, in a case where a time limit for the data of the LCG associated with the DSR expires, the DSR that has been triggered and has not been cancelled.

2. The terminal apparatus according to claim 1, wherein
the DSR includes

a field with bits each indicating whether a buffer size field for each LCG is present,
a field indicating the remaining time with respect to the earliest time limit for the data of the LCG, and
a field indicating a buffer size related to the LCG.

3. The terminal apparatus according to claim 2, wherein
the controller is configured to switch a table between a first table and a second table different from the first table to set the field indicating the buffer size.

4. The terminal apparatus according to claim 1, wherein
the DSR includes

a field with bits each indicating whether a buffer size field for each LCG is present, and
a field including information related to the data of the LCG with the remaining time being below the threshold.

5. The terminal apparatus according to any one of claims 1 to 4, wherein
the DSR is a medium access control control element (MAC CE) including a subheader including an extended logical channel identifier (eLCID) for identification of the DSR.

6. A method of a terminal apparatus (10), the method comprising:

receiving, from a base station apparatus (20), a radio resource control (RRC) message including information for configuring an identifier (ID) of a logical channel group (LCG) to which a logical channel (LCH) belongs, and information for indicating a threshold for control of triggering of a delay status report (DSR) for data of the LCG;

controlling the triggering of the DSR on the basis of that remaining time with respect to an earliest time limit for the data of the LCG becomes below the threshold and the DSR for the data of the LCG is not transmitted; and

cancelling, in a case where a time limit for the data of the LCG associated with the DSR expires, the DSR that has been triggered and has not been cancelled.

7. The method of the terminal apparatus according to claim 6, wherein
   the DSR includes

   a field with bits each indicating whether a buffer size field for each LCG is present,
   a field indicating the remaining time with respect to the earliest time limit for the data of the LCG, and
   a field indicating a buffer size related to the LCG.

8. The method of the terminal apparatus according to claim 7, further comprising:
   switching a table between a first table and a second table different from the first table to set the field indicating the buffer size.

9. The method of the terminal apparatus according to claim 6, wherein
   the DSR includes

   a field with bits each indicating whether a buffer size field for each LCG is present, and
   a field including information related to the data of the LCG with the remaining time being below the threshold.

10. The method of the terminal apparatus according to any one of claims 6 to 9, wherein
    the DSR is a medium access control control element (MAC CE) including a subheader including an extended logical channel identifier (eLCID) for identification of the DSR.

S

CORE NETWORK ~ 30

NG                    NG

20 ~ BASE STATION APPARATUS ——Xn—— BASE STATION APPARATUS ~ 20

TERMINAL APPARATUS                    TERMINAL APPARATUS

10                                    10

Fig. 1

Fig. 2

Fig. 3

10

TERMINAL APPARATUS

101

PROCESSOR

103

INPUT/OUTPUT
INTERFACE

105

MEMORY

RADIO INTERFACE

102

104

Fig. 4

10

TERMINAL APPARATUS

120

COMMUNICATOR

110

CONTROLLER

TRANSMITTER ~121

RECEIVER ~122

Fig. 5

Fig. 6

20

BASE STATION APPARATUS

220

COMMUNICATOR

210

CONTROLLER

TRANSMITTER —221

RECEIVER —222

230

NETWORK
COMMUNICATOR

Fig. 7

1 radio frame (10 ms)

1 half frame (5 ms)

1 subframe (1 ms)

μ = 0

1 slot (14 OFDM symbols)

μ = 1

1 slot (14 OFDM symbols)        1 slot (14 OFDM symbols)

Fig. 8

900　LCG ID　Buffer Size

910　920

Fig. 9

| | LCG7 | LCG6 | LCG5 | LCG4 | LCG3 | LCG2 | LCG1 | LCG0 |
|---|---|---|---|---|---|---|---|---|

1010

1021 — Buffer Size (LCG1)

1022 — Buffer Size (LCG2)

1020

Fig. 10

10

20

TERMINAL
APPARATUS

BASE STATION
APPARATUS

RRC MESSAGE                S1101

BSR                        S1102

Fig. 11

1210 — | LCG7 | LCG6 | LCG5 | LCG4 | LCG3 | LCG2 | LCG1 | LCG0 |

1221 — 1221a / Buffer Size | 1221b / Delay Information

1222 — 1222a / Buffer Size | 1222b / Delay Information

1223 — Buffer Size

1220

1200

Fig. 12

1210 ⌒ ⟨

| LCG7 | LCG6 | LCG5 | LCG4 | LCG3 | LCG2 | LCG1 | LCG0 |
|------|------|------|------|------|------|------|------|

1221 ⌒
1221a
1221b

| Buffer Size | Delay Information |
|-------------|-------------------|

1222 ⌒
1222a
1222b

| Buffer Size | Delay Information |
|-------------|-------------------|

1223 ⌒
1223a
1223b

| Buffer Size | Delay Information |
|-------------|-------------------|

1220
1200

Fig. 13

41

Fig. 14

| LCG1: REMAINING TIME 5 ms | LCG1: REMAINING TIME 2 ms |
| LCG2: REMAINING TIME 8 ms | LCG2: REMAINING TIME 5 ms |

t1

t4

Fig. 15

START

S1601

TRIGGER CONDITION
IS SATISFIED? — No

Yes

S1602

CONDITION (e1) IS
SATISFIED? — Yes

No

S1603

TRANSMIT DELAY
INFORMATION REPORT

END

Fig. 16

START

S1701

TRIGGER CONDITION
IS SATISFIED?

No

Yes

S1702

CONDITION (e2) IS
SATISFIED?

Yes

No

S1703

TRANSMIT DELAY
INFORMATION REPORT

END

Fig. 17

Fig. 18

START

S1901

TRIGGER CONDITION
IS SATISFIED?   No

Yes

S1902

CONDITION (f1) IS
SATISFIED?   No

Yes

S1903
TRANSMIT DELAY
INFORMATION REPORT

S1904
TRANSMIT SR

END

Fig. 19

START

↓ S2001

TRIGGER CONDITION
IS SATISFIED? — No →

Yes ↓

CONDITION (g1) IS
SATISFIED? — No →

Yes ↓

S2003
TRANSMIT DELAY
INFORMATION REPORT

S2004
CANCEL TRANSMISSION OF
DELAY INFORMATION REPORT

END

Fig. 20

## INTERNATIONAL SEARCH REPORT

International application No.

**PCT/JP2024/009669**

| | |
|---|---|
| **A. CLASSIFICATION OF SUBJECT MATTER** | |
| *H04W 72/1268*(2023.01)i; *H04W 72/21*(2023.01)i; *H04W 72/512*(2023.01)i | |
| FI: H04W72/1268; H04W72/21; H04W72/512 | |
| According to International Patent Classification (IPC) or to both national classification and IPC | |

| **B. FIELDS SEARCHED** |
|---|
| Minimum documentation searched (classification system followed by classification symbols) |
|     H04B7/24-7/26, H04W4/00-99/00 |
| Documentation searched other than minimum documentation to the extent that such documents are included in the fields searched |
|     Published examined utility model applications of Japan 1922-1996<br>    Published unexamined utility model applications of Japan 1971-2024<br>    Registered utility model specifications of Japan 1996-2024<br>    Published registered utility model applications of Japan 1994-2024 |
| Electronic data base consulted during the international search (name of data base and, where practicable, search terms used) |
| |

**C. DOCUMENTS CONSIDERED TO BE RELEVANT**

| Category* | Citation of document, with indication, where appropriate, of the relevant passages | Relevant to claim No. |
|---|---|---|
| A | XIAOMI COMMUNICATIONS. Discussing on UE feedback enhancements for XR capacity, 3GPP TSG RAN WG 2 #121 R 2-2300422, Internet<URL:https://www.3gpp.org/ftp/tsg_ran/WG 2_RL 2/TSGR 2_121/Docs/R 2-2300422.zip>, 17 February 2023<br>    pp. 2, 3 | 1-10 |
| A | APPLE. Views on BSR Enhancements for XR, 3GPP TSG RAN WG 2 #121 R 2-2300727, Internet<URL:https://www.3gpp.org/ftp/tsg_ran/WG 2_RL 2/TSGR 2_121/Docs/R 2-2300727.zip>, 17 February 2023<br>    pp. 2, 5 | 1-10 |
| A | WO 2023/012914 A1 (NTT DOCOMO, INC.) 09 February 2023 (2023-02-09)<br>    paragraphs [0072]-[0082] | 1-10 |
| P, X | LG ELECTRONICS INC. Discussion on BSR enhancement and delay information report, 3GPP TSG RAN WG 2 #121bis-e R 2- 2304008, Internet<URL:https://www.3gpp.org/ftp/tsg_ran/WG 2_RL 2/TSGR 2_121bis-e/Docs/R 2-2304008.zip>, 17 April 2023<br>    p. 3, lines 2-9, p. 5, proposal 7, lines 23-41 | 1, 3, 6, 8 |

☑ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 April 2024** | **14 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
| --- |
| **PCT/JP2024/009669** |

**C.    DOCUMENTS CONSIDERED TO BE RELEVANT**

| Category* | Citation of document, with indication, where appropriate, of the relevant passages | Relevant to claim No. |
| --- | --- | --- |
| P, X | DENSO CORPORATION. Discussion on delay status reporting for XR, 3GPP TSG RAN WG 2 #123 R 2-2307243, Internet<URL:https://www.3gpp.org/ftp/tsg_ran/WG 2_RL 2/ TSGR 2_123/Docs/R 2-2307243.zip>, 09 August 2023 pp. 1, 2 section 2, particularly , proposal 3 | 1, 6 |

Form PCT/ISA/210 (second sheet) (July 2022)

**INTERNATIONAL SEARCH REPORT**
Information on patent family members

International application No.

**PCT/JP2024/009669**

| Patent document cited in search report | Publication date (day/month/year) | Patent family member(s) | Publication date (day/month/year) |
|---|---|---|---|
| WO 2023/012914 A1 | 09 February 2023 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023062921 A

**Non-patent literature cited in the description**

- *3GPP TR 38.838 V17.0.0*, December 2021
- *3GPP TS 38.321 V17.2.0*, September 2022
- *3GPP TS 38.331 V17.2.0*, September 2022